(19) Europäisches Patentamt
European Patent Office
Office européen des brevets

(11) **EP 4 132 133 A1**

(12) **EUROPEAN PATENT APPLICATION**
published in accordance with Art. 153(4) EPC

(43) Date of publication:
**08.02.2023 Bulletin 2023/06**

(21) Application number: **21788434.5**

(22) Date of filing: **01.04.2021**

(51) International Patent Classification (IPC):
**H04W 56/00** (2009.01)

(52) Cooperative Patent Classification (CPC):
**H04W 56/00;** Y02D 30/70

(86) International application number:
**PCT/CN2021/085071**

(87) International publication number:
**WO 2021/208751 (21.10.2021 Gazette 2021/42)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **15.04.2020 CN 202010297025**

(71) Applicant: **Huawei Technologies Co., Ltd.**
**Shenzhen, Guangdong 518129 (CN)**

(72) Inventors:
• **XU, Xiaoying**
  **Shenzhen, Guangdong 518129 (CN)**
• **QU, Kaiyang**
  **Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **TIME SYNCHRONIZATION METHOD AND DEVICE**

(57)     This application relates to the field of communication technologies, and discloses a time synchronization method and an apparatus. The method includes: A CU determines reference time of a terminal device at a reference point, and sends first information to the terminal device, where the first information is used to indicate the reference time of the terminal device at the reference point. After receiving the first information, the terminal device may perform time synchronization based on the reference time of the terminal device at the reference point. In this manner, the terminal device may obtain the reference time of the terminal device at the reference point from the CU, so that processing complexity of the terminal device can be effectively reduced, and power consumption of the terminal device can be reduced.

FIG. 6

**Description**

**CROSS-REFERENCE TO RELATED APPLICATIONS**

This application claims priority to Chinese Patent Application No. 202010297025.8, filed with the China National Intellectual Property Administration on April 15, 2020 and entitled "TIME SYNCHRONIZATION METHOD AND APPARATUS", which is incorporated herein by reference in its entirety.

**TECHNICAL FIELD**

This application relates to the field of communication technologies, and in particular, to a time synchronization method and an apparatus.

**BACKGROUND**

As the main driving forces of future communication development, the mobile Internet and the Internet of Things have had a great impact on people's living, work, leisure, and transportation. Currently, to implement precise control of services, high-precision time synchronization between a terminal device and a radio network side is required in a plurality of fields such as industrial control, smart grids, and unmanned driving.

In a 5th generation (the $5^{th}$ generation, 5G) communication system, an access network device on the radio network side may include separate nodes, for example, a central unit (central unit, CU) and a distributed unit (distributed unit, DU). In this scenario, further research is still needed on how the terminal device reduces complexity of performing time synchronization.

**SUMMARY**

This application provides a time synchronization method and an apparatus, to reduce complexity of performing time synchronization by a terminal device.

According to a first aspect, an embodiment of this application provides a time synchronization method. The method is applicable to a first communication apparatus, and the first communication apparatus is a CU or a chip in the CU. For example, the method is applicable to the CU. In the method, the CU determines first reference time, where the first reference time is reference time of a terminal device at a reference point; and sends first information to the terminal device, where the first information is used to indicate the first reference time.

In this manner, the terminal device may obtain the reference time of the terminal device at the reference point from the CU. Compared with an existing solution in which a terminal device determines reference time of the terminal device at a reference point based on reference time on a DU side that is obtained from a CU and a unidirectional transmission delay between the terminal device and the DU, this solution can effectively reduce processing complexity of the terminal device and reduce power consumption of the terminal device.

In a possible design, that the CU determines first reference time may mean: The CU receives second information and third information from a DU, where the second information is used to indicate second reference time, the second reference time is reference time of the DU at the reference point, and the third information is used to determine a unidirectional transmission delay between the DU and the terminal device; and the CU determines the first reference time based on the second reference time and the unidirectional transmission delay.

In a possible design, that the CU receives third information from a DU may mean: The CU sends first request information to the DU, where the first request information is used to request the unidirectional transmission delay, and the first request information includes an identifier of the terminal device; and receives the third information sent by the DU.

In a possible design, the first request information is carried in a reference time information reporting control message, a downlink RRC transfer message, a terminal device context setup request message, or a terminal device context modify request message.

In a possible design, the method further includes: The CU receives capability information from the DU, where the capability information is used to indicate that the DU supports reporting of the unidirectional transmission delay.

In this way, after determining, based on the capability information of the DU, that the DU supports reporting of the unidirectional transmission delay, the CU may send the first request information to the DU. If determining that the DU does not support reporting of the unidirectional transmission delay, the CU may no longer send the first request information to the DU. This can reduce resource overheads.

In a possible design, the third information includes at least one of the following: (1) a first time length, where the first time length represents a round trip transmission delay between the DU and the terminal device, the first time length is obtained by measuring a first uplink signal or a second uplink signal sent by the terminal device, the first uplink signal is a random access preamble, and the second uplink signal is different from the first uplink signal; (2) a second time length, where the second time length is half of the first time length; (3) a timing advance TA value of the terminal device; (4) half of the TA value; and (5) an adjustment amount corresponding to the TA value.

In a possible design, time precision of the first time length or the second time length is higher than time precision of the TA value.

In this way, because the time precision of the first time length or the second time length is higher than the time precision of the TA value, the reference time of the terminal device at the reference point determined by the CU can better meet a high-precision time synchronization requirement.

In a possible design, the time precision of the first time length or the second time length is nanoseconds or ten nanoseconds.

In a possible design, when the third information includes an adjustment amount corresponding to the TA value, the method further includes: If the adjustment amount corresponding to the TA value is a first adjustment amount, the CU determines the TA value based on the first adjustment amount, and further determines the unidirectional transmission delay based on the TA value. Alternatively, if the adjustment amount corresponding to the TA value is a second adjustment amount, the CU determines the TA value based on an original TA value and the second adjustment amount, and further determines the unidirectional transmission delay based on the TA value.

In a possible design, a quantity of bits included in an information element used to carry the first adjustment amount is greater than 12, or a quantity of bits included in an information element used to carry the second adjustment amount is greater than 6.

In this way, time precision of the adjustment amount of the TA value can be effectively improved, so that the reference time of the terminal device at the reference point determined by the CU can better meet a high-precision time synchronization requirement.

In a possible design, the third information further includes an identifier of the terminal device.

In a possible design, that the CU determines first reference time may mean: The CU receives fourth information from the DU, where the fourth information is used to indicate the first reference time.

In a possible design, that the CU receives fourth information from the DU may mean: The CU sends second request information to the DU, where the second request information is used to request the first reference time, and the second request information includes the identifier of the terminal device; and receives the fourth information sent by the DU.

In a possible design, that the CU receives fourth information from the DU may mean: The CU sends a reference time information reporting control message to the DU, where the reference time information reporting control message includes the identifier of the terminal device; and receives the fourth information sent by the DU.

In a possible design, the reference time information reporting control message further includes indication information, and the indication information is used to indicate that reference time requested by the reference time information reporting control message is the reference time of the terminal device at the reference point.

In a possible design, the first information includes a plurality of time parameters corresponding to the first reference time.

In a possible design, the first information further includes at least one of the following: (1) reference point information, used to indicate the reference point; (2) time type information, used to indicate a time type of the first reference time; and (3) an undetermined error value.

In a possible design, the first information is carried in an RRC message.

In this case, because the CU may send the first information to the terminal device in higher layer signaling (for example, an RRC message), information transmission security can be effectively ensured.

According to a second aspect, an embodiment of this application provides a time synchronization method. The method is applicable to a second communication apparatus, and the second communication apparatus is a DU or a chip in the DU. For example, this method is applicable to the DU. In this method, the DU determines second information and third information, and sends the second information and the third information to a CU, where the second information is used to indicate second reference time, the second reference time is reference time of the DU at a reference point, and the third information is used to determine a unidirectional transmission delay between the DU and a terminal device.

In a possible design, that the DU sends the third information to a CU may mean: The DU receives first request information from the CU, where the first request information is used to request the unidirectional transmission delay, and the first request information includes an identifier of the terminal device; and the DU sends the third information to the CU based on the first request information.

In a possible design, the first request information is carried in a reference time information reporting control message, a downlink RRC transfer message, a terminal device context setup request message, or a terminal device context modify request message.

In a possible design, the method further includes: The DU sends capability information of the DU to the CU, where the capability information is used to indicate that the DU supports reporting of the unidirectional transmission delay.

In a possible design, that the DU sends the second information and the third information to a CU may mean: The DU receives first request information from the CU, where the first request information is used to request the second information and the third information, and the first request information includes an identifier of the terminal device; and the DU sends the second information and the third information to the CU after determining that reporting of the unidirectional transmission delay is supported.

In a possible design, the third information includes at least one of the following: (1) a first time length, where the first time length represents a round trip transmission delay between the DU and the terminal device, the first time length is obtained by measuring a first uplink signal or a second uplink signal sent by the terminal device, the first uplink signal is a random access preamble, and the second uplink signal is different from the first uplink signal; (2) a second time length, where the second time length is half of the first time length; (3) a TA value of the terminal device; (4) half of the TA value; and (5) an adjustment amount corresponding to the TA value.

In a possible design, time precision of the first time length or the second time length is higher than time precision of the TA value.

In a possible design, the time precision of the first time length or the second time length is nanoseconds or ten nanoseconds.

In a possible design, an adjustment amount corresponding to the TA value is a first adjustment amount or a second adjustment amount. A quantity of bits included in an information element used to carry the first adjustment amount is greater than 12, or a quantity of bits included in an information element used to carry the second adjustment amount is greater than 6.

In a possible design, the third information further includes the identifier of the terminal device.

According to a third aspect, an embodiment of this application provides a time synchronization method. The method is applicable to a second communication apparatus, and the second communication apparatus is a DU or a chip in the DU. For example, this method is applicable to the DU. In this method, the DU determines first reference time, and sends fourth information to a CU. The fourth information is used to indicate the first reference time, and the first reference time is reference time of a terminal device at a reference point.

In a possible design, that the DU sends fourth information to a CU includes: receiving second request information from the CU, where the second request information is used to request the first reference time, and the second request information includes an identifier of the terminal device; and sending the fourth information to the CU based on the second request information.

In a possible design, that the DU sends fourth information to a CU includes: receiving a reference time information reporting control message from the CU, where the reference time information reporting control message includes an identifier of the terminal device; and sending the fourth information to the CU based on the reference time information reporting control message.

In a possible design, the reference time information reporting control message further includes indication information, and the indication information is used to indicate that reference time requested by the reference time information reporting control message is the reference time of the terminal device at the reference point.

In a possible design, that the DU determines the first reference time includes: The DU determines second reference time, where the second reference time is reference time of the DU at the reference point; and determines a unidirectional transmission delay between the DU and the terminal device; and then the DU determines the first reference time based on the second reference time and the unidirectional transmission delay.

In a possible design, that the DU determines the unidirectional transmission delay may mean: The DU obtains a first time length by measuring a first uplink signal or a second uplink signal sent by the terminal device, where the first uplink signal is a random access preamble, the second uplink signal is different from the first uplink signal, and the first time length represents a round trip transmission delay between the DU and the terminal device; and determines the unidirectional transmission delay based on the first time length. Alternatively, the DU determines a TA value of the terminal device, and determines the unidirectional transmission delay based on the TA value.

In a possible design, time precision of the first time length is higher than time precision of the TA value.

In a possible design, the time precision of the first time length is nanoseconds or ten nanoseconds.

According to a fourth aspect, an embodiment of this application provides a time synchronization method. The method is applicable to a third communication apparatus, and the third communication apparatus is a terminal device or a chip in the terminal device. For example, this method is applicable to the terminal device. In this method, the terminal device receives first information, where the first information is used to indicate first reference time, and the first reference time is reference time of the terminal device at a reference point; and then performs time synchronization based on the first reference time.

In a possible design, the terminal device may receive the first information from a CU or a DU.

The time synchronization methods described in the second aspect, the third aspect, and the fourth aspect correspond to the time synchronization method described in the first aspect. For beneficial effects of related technical features, refer to the descriptions in the first aspect.

According to a fifth aspect, this application provides a communication apparatus. The communication apparatus may be a CU or a chip disposed inside the CU. The communication apparatus has a function for implementing the first aspect. For example, the communication apparatus includes a corresponding module, unit, or means (means) for performing the steps in the first aspect. The module, unit, or means may be implemented by software or hardware, or may be implemented by hardware executing corresponding software.

In a possible design, the communication apparatus includes a processing unit and a communication unit. The communication unit may be configured to receive and send a signal, to implement communication between the communication apparatus and another apparatus. For example, the communication unit is configured to receive configuration information from a network device, and the processing unit may be configured to perform some internal operations of the communication apparatus. Functions performed by the processing unit and the communication unit may correspond to the steps in the first aspect.

In a possible design, the communication apparatus includes a processor, and may further include a transceiver. The transceiver is configured to receive and send a signal, and the processor executes program instructions to complete the method according to any possible design or implementation of the first aspect. The communication apparatus may further include one or more memories, and the memory is configured to be coupled to the processor. The one or more memories may be integrated with the processor, or may be disposed independent of the processor. This is not limited in this application. The memory may store a necessary computer program or instructions for implementing a function in the first aspect. The processor may execute the computer program or the instructions stored in the memory. When the computer program or the instructions are executed, the communication apparatus is enabled to implement the method according to any possible design or implementation of the first aspect.

In a possible design, the communication apparatus includes a processor and a memory. The memory may store a necessary computer program or instructions for implementing a function in the first aspect. The processor may execute the computer program or the instructions stored in the memory. When the computer program or the instructions are executed, the communication apparatus is enabled to implement the method according to any possible design or implementation of the first aspect.

In a possible design, the communication apparatus includes at least one processor and an interface circuit. The at least one processor is configured to communicate with another apparatus by using the interface circuit, and perform the method according to any possible design or implementation of the first aspect.

According to a sixth aspect, this application provides a communication apparatus. The communication apparatus may be a DU or a chip disposed inside the DU. The communication apparatus has a function for implementing the second aspect or the third aspect. For example, the communication apparatus includes a corresponding module, unit, or means for performing the steps in the second aspect or the third aspect. The module, unit, or means may be implemented by software or hardware, or may be implemented by hardware executing corresponding software.

In a possible design, the communication apparatus includes a processing unit and a communication unit. The communication unit may be configured to receive and send a signal, to implement communication between the communication apparatus and another apparatus. For example, the communication unit is configured to send system information to a terminal device. The processing unit may be configured to perform some internal operations of the communication apparatus. Functions performed by the processing unit and the communication unit may correspond to the steps in the second aspect or the third aspect.

In a possible design, the communication apparatus includes a processor, and may further include a transceiver. The transceiver is configured to receive and send a signal, and the processor executes program instructions to complete the method according to any possible design or implementation of the second aspect or the third aspect. The communication apparatus may further include one or more memories, and the memory is configured to be coupled to the processor. The one or more memories may be integrated with the processor, or may be disposed independent of the processor. This is not limited in this application. The memory may store a necessary computer program or instructions for implementing a function in the second aspect or the third aspect. The processor may execute the computer program or the instructions stored in the memory. When the computer program or the instructions are executed, the communication apparatus is enabled to implement the method according to any possible design or implementation of the second aspect or the third aspect.

In a possible design, the communication apparatus includes a processor and a memory. The memory may store a necessary computer program or instructions for implementing a function in the second aspect or the third aspect. The processor may execute the computer program or the instructions stored in the memory. When the computer program or the instructions are executed, the communication apparatus is enabled to implement the method according to any possible design or implementation of the second aspect or the third aspect.

In a possible design, the communication apparatus includes at least one processor and an interface circuit. The at least one processor is configured to communicate with another apparatus by using the interface circuit, and perform the method according to any possible design or implementation of the second aspect or the third aspect.

According to a seventh aspect, this application provides a communication system. The communication system may include the communication apparatus according to the fifth aspect and the communication apparatus according to the sixth aspect. In a possible design, the communication system may further include a terminal device.

According to an eighth aspect, this application provides a computer-readable storage medium, and the computer-readable storage medium stores computer-readable instructions. When a computer reads and executes the computer-readable instructions, the computer is enabled to perform the method according to any possible design of the first aspect to the fourth aspect.

According to a ninth aspect, this application provides a computer program product. When a computer reads and executes the computer program product, the computer is enabled to perform the method according to any possible design of the first aspect to the fourth aspect.

According to a tenth aspect, this application provides a chip, where the chip includes a processor. The processor is coupled to a memory, and is configured to read and execute software programs stored in the memory, to implement the method according to any possible design of the first aspect to the fourth aspect.

## BRIEF DESCRIPTION OF DRAWINGS

FIG. 1 is a schematic diagram of a network architecture to which an embodiment of this application is applicable;

FIG. 2a is a schematic diagram of downlink data transmission between layers according to an embodiment of this application;

FIG. 2b is a schematic diagram of a CU-DU separated architecture according to an embodiment of this application;

FIG. 2c is another schematic diagram of a CU-DU separated architecture according to an embodiment of this application;

FIG. 2d is another schematic diagram of a CU-DU separated architecture according to an embodiment of this application;

FIG. 3 is a schematic flowchart of performing high-precision time synchronization between a terminal device and a radio network side according to an embodiment of this application;

FIG. 4 is a schematic diagram of uplink time adjustment according to an embodiment of this application;

FIG. 5 is a schematic flowchart corresponding to a time synchronization method according to Embodiment 1 of this application;

FIG. 6 is a schematic flowchart corresponding to a time synchronization method according to Embodiment 2 of this application;

FIG. 7 is a schematic flowchart corresponding to a time synchronization method according to Embodiment 3 of this application;

FIG. 8 is a possible schematic block diagram of an apparatus according to an embodiment of this application; and

FIG. 9 is a schematic diagram of a structure of a network device according to embodiment of this application.

## DESCRIPTION OF EMBODIMENTS

The following clearly describes technical solutions in embodiments of this application with reference to the accompanying drawings in embodiments of this application.

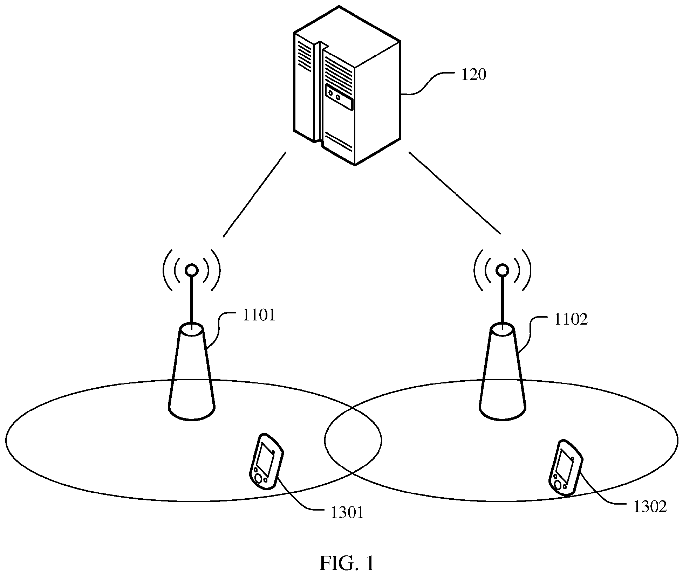

FIG. 1 is a schematic diagram of a network architecture to which an embodiment of this application is applicable. As shown in FIG. 1, a terminal device (for example, a terminal device 1301 or a terminal device 1302) may access a radio network, to obtain a service of an external network (for example, the Internet) via the radio network, or communicate with another device via the radio network, for example, may communicate with another terminal device. The radio network includes a radio access network (radio access network, RAN) and a core network (core network, CN). The RAN is configured to connect the terminal device to the radio network, and the CN is configured to manage the terminal device and provide a gateway for communicating with the external network.

The following separately describes in detail the terminal device, the RAN, and the CN in FIG. 1.

1. Terminal device

The terminal device includes a device that provides a user with voice and/or data connectivity, for example, may include a handheld device with a wireless connection function or a processing device connected to a radio modem. The terminal device may communicate with the core network via the radio access network (radio access network, RAN), and exchange voice and/or data with the RAN. The terminal device may include user equipment (user equipment, UE), a wireless terminal device, a mobile terminal device, a device-to-device (device-to-device, D2D) terminal device, a vehicle-to-everything (vehicle to everything, V2X) terminal device, a machine-to-machine/machine type communications (machine-to-machine /machine-type communications, M2M/MTC) terminal device, an Internet of Things (Internet of Things, IoT) terminal device, a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), or the like. For example, the terminal device may include a mobile phone (or referred to as a "cellular" phone), a computer with a mobile terminal device, a portable, pocket-sized, handheld, or computer built-in mobile apparatus, or the like. For example, the terminal device may be a personal communication service (personal communication service, PCS) phone, a cordless phone, a session initiation protocol (session initiation protocol, SIP) phone, a wireless local loop (wireless local loop, WLL) station, or a personal digital assistant (personal digital assistant, PDA). The terminal device further includes a limited device, for example, a device with low power consumption, a device with a limited storage capability, or a device with a limited computing capability. For example, the terminal device includes information sensing devices such as a barcode sensor, radio frequency identification (radio frequency identification, RFID) a sensor, a global positioning system (global positioning system, GPS), and a laser scanner.

## 2. RAN

The RAN may include one or more RAN devices, for example, a RAN device 1101 and a RAN device 1102. An interface between the RAN device and the terminal device may be a Uu interface (or referred to as an air interface). Certainly, in future communication, names of these interfaces may remain unchanged, or may be replaced with other names. This is not limited in this application.

The RAN device is a node or a device that enables the terminal device to access the radio network, and the RAN device may also be referred to as a network device or a base station. The RAN device includes, for example, but is not limited to, a next-generation NodeB (generation Node B, gNB), an evolved NodeB (evolved node B, eNB), a radio network controller (radio network controller, RNC), a NodeB (node B, NB), a base station controller (base station controller, BSC), a base transceiver station (base transceiver station, BTS), a home base station (for example, a home evolved nodeB, or a home node B, HNB), a baseband unit (baseband unit, BBU), a transmission reception point (transmitting and receiving point, TRP), a transmission point (transmitting point, TP), and a mobile switching center in a 5G communication system.

### (1) Protocol layer structure

Communication between the RAN device and the terminal device complies with a specific protocol layer structure. For example, a control plane protocol layer structure may include functions of protocol layers such as an RRC layer, a packet data convergence protocol (packet data convergence protocol, PDCP) layer, a radio link control (radio link control, RLC) layer, a media access control (media access control, MAC) layer, and a physical layer, and a user plane protocol layer structure may include functions of protocol layers such as a PDCP layer, an RLC layer, a MAC layer, and a physical layer. In a possible implementation, a service data adaptation protocol (service data adaptation protocol, SDAP) layer may be further included above the PDCP layer.

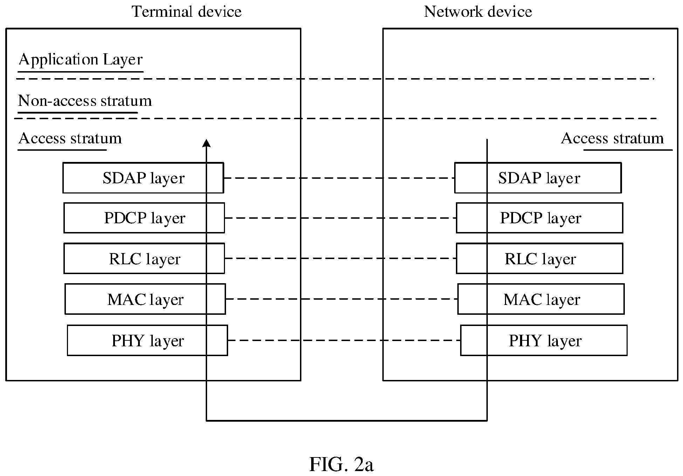

Data transmission between the network device and the terminal device is used as an example. Data transmission needs to pass through a user plane protocol layer such as the SDAP layer, the PDCP layer, the RLC layer, the MAC layer, or the physical layer. The SDAP layer, the PDCP layer, the RLC layer, the MAC layer, and the physical layer may also be collectively referred to as an access stratum. Because a data transmission direction includes sending or receiving, each layer is further divided into a sending part and a receiving part. The following uses data transmission as an example. FIG. 2a is a schematic diagram of downlink data transmission between layers. In FIG. 2a, a downward arrow represents data sending, and an upward arrow represents data receiving. After obtaining data from an upper layer, a PDCP layer transmits the data to an RLC layer and a MAC layer, the MAC layer generates a transport block, and then wireless transmission is performed through a physical layer. Data is correspondingly encapsulated at each layer. Data received by a layer from an upper layer of the layer is considered as a service data unit (service data unit, SDU) of the layer. After being encapsulated at the layer, the data becomes a PDU, and is then transferred to a next layer.

For example, it can be further learned from FIG. 2a that, the terminal device further has an application layer and a non-access stratum. The application layer may be configured to provide a service for an application program installed on the terminal device. For example, downlink data received by the terminal device may be sequentially transmitted from the physical layer to the application layer, and then is provided by the application layer for the application program. For another example, the application layer may obtain data generated by the application program, sequentially transmit the data to the physical layer, and send the data to another communication apparatus. The non-access stratum may be used to forward user data. For example, the non-access stratum forwards uplink data received from the application layer to the SDAP layer, or forwards downlink data received from the SDAP layer to the application layer.

### (2) CU and DU

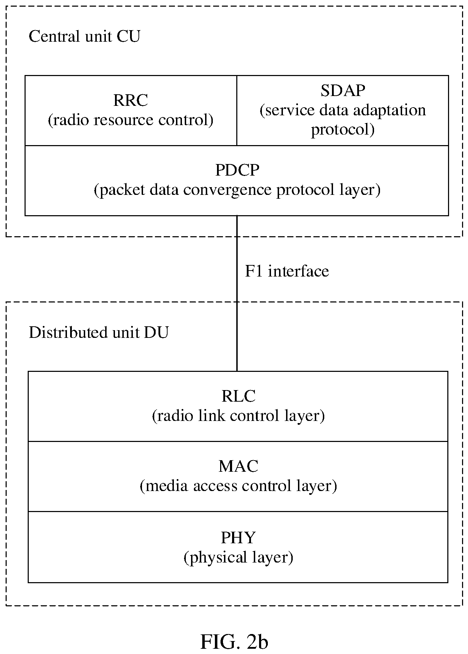

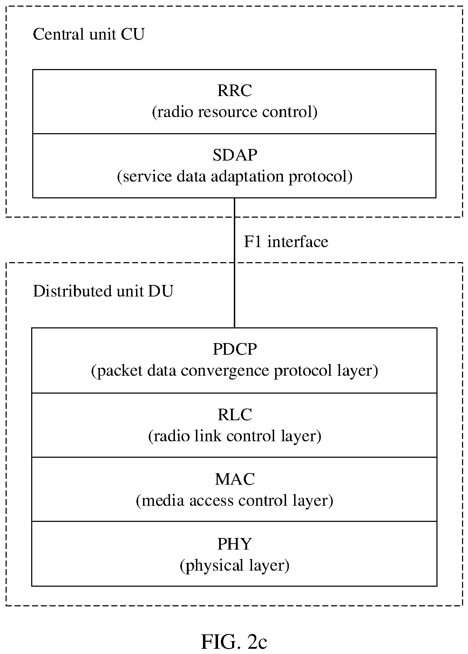

In embodiments of this application, the RAN device may include a central unit (centralized unit, CU) and a distributed unit (distributed unit, DU), and a plurality of DUs may be centrally controlled by one CU. For example, an interface between the CU and the DU may be referred to as an F1 interface. A control plane (control panel, CP) interface may be an F1-C interface, and a user plane (user panel, UP) interface may be an F1-U interface. The CU and the DU may be divided based on protocol layers of the radio network. For example, as shown in FIG. 2b, functions of the PDCP layer and protocol layers above the PDCP layer are disposed on the CU, and functions of protocol layers below the PDCP layer (for example, the RLC layer and the MAC layer) are disposed on the DU. For another example, as shown in FIG. 2c, functions of protocol layers above the PDCP layer are disposed on the CU, and functions of the PDCP layer and protocol layers below the PDCP layer are disposed on the DU.

It may be understood that processing function division of the CU and the DU based on the protocol layers is merely an example, and there may be other division. For example, the CU or the DU may be divided into functions having more protocol layers. For another example, the CU or the DU may be further divided into some processing functions having protocol layers. In a design, some functions of the RLC layer and a function of a protocol layer above the RLC layer are deployed on the CU, and other functions of the RLC layer and a function of a protocol layer below the RLC layer are deployed on the DU. In another design, function division of the CU or the DU may alternatively be performed based on a service type or another system requirement. For example, division may be performed based on a delay. Functions for which processing time needs to meet a delay requirement are deployed on the DU, and functions for which processing time does not need to meet the delay requirement are deployed on the CU. In another design, the CU may alternatively have one or more functions of the core network. For example, the CU may be disposed on a network side for centralized management; and the DU may have a plurality of radio frequency functions, or the radio frequency functions may be disposed remotely. This is not limited in embodiments of this application.

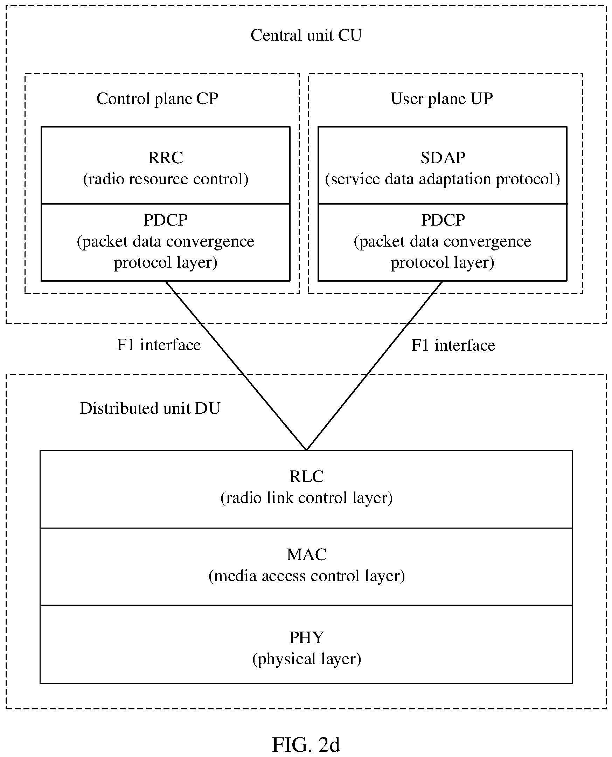

For example, functions of the CU may be implemented by one entity or different entities. For example, as shown in FIG. 2d, the functions of the CU may be further divided. To be specific, a control plane panel and a user plane are separated and are implemented by different entities: a control plane CU (CU-CP) entity and a user plane CU (CU-UP) entity. The CU-CP entity and the CU-UP entity may be coupled to the DU, to jointly complete a function of the RAN device.

It should be noted that in the architectures shown in FIG. 2b to FIG. 2d, signaling generated by the CU may be sent to the terminal device via the DU, or signaling generated by the terminal device may be sent to the CU via the DU. The DU may transparently transmit the signaling to the terminal device or the CU by directly encapsulating the signaling at a protocol layer without parsing the signaling. In the following embodiments, if transmission of the signaling between the DU and the terminal device is described, sending or receiving the signaling by the DU is applicable to the scenario. For example, signaling of an RRC layer or a PDCP layer is finally processed as signaling of a physical layer and sent to the terminal device, or signaling of an RRC layer or a PDCP layer is converted from received signaling of a physical layer. In this architecture, the signaling of the RRC or the PDCP layer may also be considered to be sent by the DU, or sent by the DU and a radio frequency apparatus.

3. CN

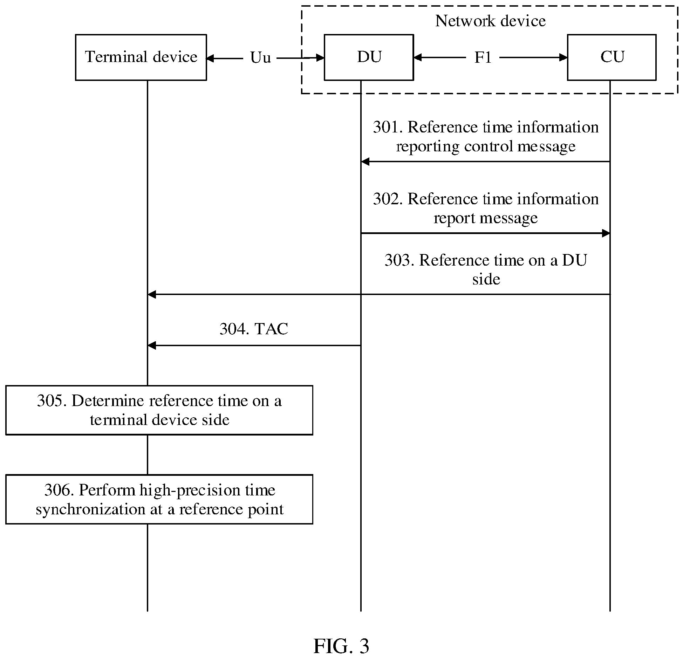

The CN may include one or more CN devices, for example, a CN device 120. A 5G communication system is used as an example. The CN may include an access and mobility management function (access and mobility management function, AMF) network element, a session management function (session management function, SMF) network element, a user plane function (user plane function, UPF) network element, a policy control function (policy control function, PCF) network element, a unified data management (unified data management, UDM) network element, an application function (application function, AF) network element, and the like.
It should be understood that quantities of devices in the communication system shown in FIG. 1 are merely used as an example. Embodiments of this application are not limited thereto. In an actual application, the communication system may further include more terminal devices and more RAN devices, and may further include other devices.
The network architecture shown in FIG. 1 is applicable to communication systems of various radio access technologies (radio access technologies, RATs), for example, a 4G (or referred to as long term evolution (long term evolution, LTE)) communication system, a 5G (or referred to as new radio (new radio, NR)) communication system, or a transition system between the LTE communication system and the 5G communication system. The transition system may also be referred to as a 4.5G communication system. Alternatively, the communication system may alternatively be a future communication system. The network architecture and the service scenario described in embodiments of this application are intended to describe the technical solutions in embodiments of this application more clearly, and do not constitute a limitation on the technical solutions provided in embodiments of this application. A person of ordinary skill in the art may know that with evolution of communication network architectures and emergence of new service scenarios, the technical solutions provided in embodiments of this application are also applicable to similar technical problems.
In the network architecture shown in FIG. 1, for a scenario in which the CU and the DU are separated, to implement high-precision time synchronization between the terminal device and the radio network side, a possible implementation is as follows: The CU obtains reference time on the DU side from the DU, and sends the reference time on the DU side to the terminal device. Correspondingly, the terminal device may determine reference time on the terminal device side based on the reference time on the DU side and a unidirectional transmission delay between the terminal device and the DU, to implement high-precision time synchronization between the terminal device and the radio network side. With reference to FIG. 3, the following describes in detail a process of performing high-precision time synchronization between a terminal device and a radio network side.
FIG. 3 is a schematic flowchart of performing high-precision time synchronization between a terminal device and a radio network side. As shown in FIG. 3, the process may include the following steps:

    Step 301. A CU sends a reference time information reporting control (reference time information reporting control) message to a DU, where the reference time information reporting control message is used to request reference time on the DU side.
    Step 302. The DU sends a reference time information report (reference time information report) message to the CU, where the reference time information report message is used to indicate the reference time on the DU side.

Step 303. The CU sends the reference time on the DU side to the terminal device.

Step 304. The terminal device receives a timing advance command (timing advance command, TAC) sent by the DU, and determines a timing advance (timing advance, TA) value of the terminal device according to the timing advance command.

Step 305. The terminal device obtains a unidirectional transmission delay between the terminal device and the DU based on the TA value, and further determines reference time on the terminal device side based on the reference time on the DU side and the unidirectional transmission delay between the terminal device and the DU.

Step 306. The terminal device performs high-precision time synchronization based on the reference time on the terminal device side.

The reference time on the DU side may be understood as reference time of the DU at a reference point, and the reference time on the terminal device side may be understood as reference time of the terminal device at the reference point. In embodiments of this application, the reference point may be pre-specified in a protocol, or may be indicated by the DU or the CU. This is not specifically limited. In an example, the reference point may be a start boundary or an end boundary of a radio frame corresponding to a reference system frame number (system frame number, SFN).

In this manner, the CU sends the reference time on the DU side to the terminal device. After receiving the reference time on the DU side, the terminal device needs to determine the reference time of the terminal device based on the unidirectional transmission delay between the terminal device and the DU. Consequently, processing complexity of the terminal device is high. In addition, the terminal device determines the unidirectional transmission delay between the terminal device and the DU based on the TA (for example, the unidirectional transmission delay is equal to half of the TA value). Because precision of the TA value is relatively low, the reference time of the terminal device determined by the terminal device may not meet a high-precision time synchronization requirement.

Based on this, in embodiments of this application, studies are conducted on related implementation of performing high-precision time synchronization between the terminal device and the radio network side in a scenario in which the CU is separated from the DU. For example, embodiments of this application provide a time synchronization method, to reduce complexity of performing time synchronization by a terminal device.

It should be noted that the time in embodiments of this application may also be understood as a clock (clock). In embodiments of this application, concepts of time and clock are not distinguished, that is, the time and the clock may be considered as equivalent concepts. For example, that the terminal device performs time synchronization may also be understood as that the terminal device performs clock synchronization.

The following first explains and describes related technical features in embodiments of this application. It should be noted that these explanations are intended to make embodiments of this application easier to understand, but should not be considered as a limitation on the protection scope claimed in this application.

## 1. Downlink synchronization

In the network architecture shown in FIG. 1, the terminal device may implement downlink synchronization with the network device, for example, frame synchronization, by receiving a synchronization signal and PBCH block (synchronization signal and PBCH block, SSB) that are sent by the network device. Therefore, the terminal device may learn, based on a reference SFN, a radio frame corresponding to the reference SFN, to perform high-precision time synchronization at a start boundary or an end boundary of the radio frame corresponding to the reference SFN. An SSB includes a primary synchronization signal (primary synchronization signal, PSS), a secondary synchronization signal (secondary synchronization signal, SSS), and a physical broadcast channel (physical broadcast channel, PBCH).

## 2. Uplink synchronization

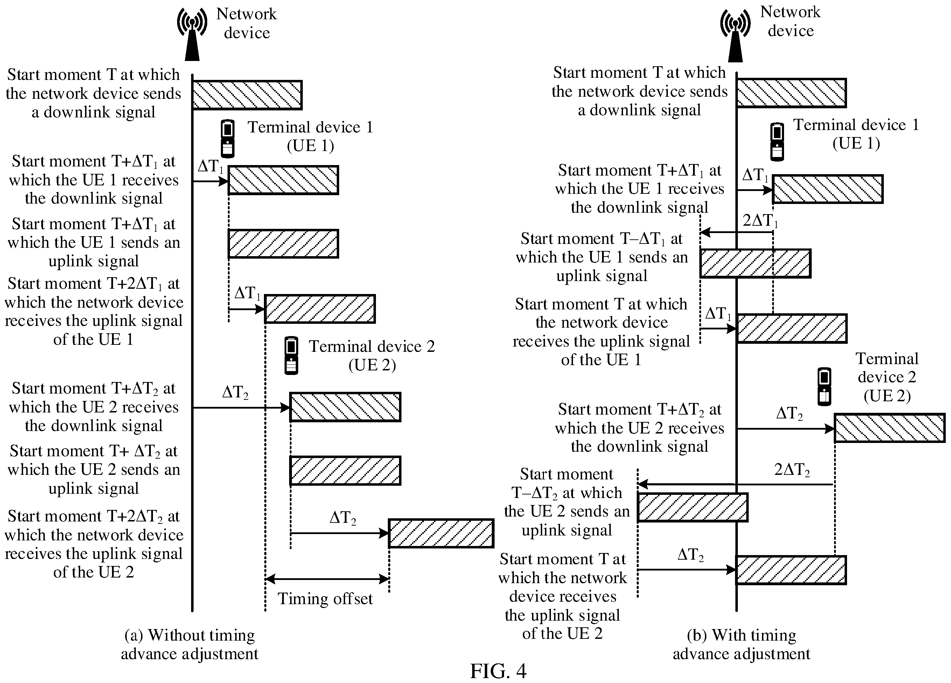

A terminal device 1 and a terminal device 2 are used as an example. As shown in (a) in FIG. 4, because there is a delay in signal propagation between a network device (for example, a DU) and a terminal device, an interval from a start moment at which the network device sends a downlink signal to a start moment at which the terminal device 1 receives the downlink signal is $\Delta T_1 = d_1/c$, where $d_1$ is a distance between the network device and the terminal device 1, and c is a signal propagation speed. For wireless communication, c is the speed of light. Similarly, $\Delta T_2 = d_2/c$, where $d_2$ is a distance between the network device and the terminal device 2. If the terminal device 1 does not perform uplink timing adjustment, and the start moment at which the terminal device 1 receives the downlink signal is used as a reference to send an uplink signal to the network device, an interval between a start moment at which the terminal device 1 sends the uplink signal and a start moment at which the network device receives the uplink signal is also $\Delta T_1$. Therefore, for the terminal device 1, there is a time difference of $2\Delta T_1$ between the start moment at which the network device sends the downlink signal and the start moment at which the network device receives the uplink signal. Similarly, for the terminal device 2, there is a time difference of $2\Delta T_2$ between a start moment at which the network device sends a downlink signal and a start moment at which the network device receives an uplink signal.

(1) Unidirectional transmission delay and round trip transmission delay

In (a) in FIG. 4, an interval (for example, $\Delta T_1$ or $\Delta T_2$) between the start moment at which the network device sends the downlink signal and the start moment at which the terminal device receives the downlink signal is a downlink transmission delay between the network device and the terminal device. An interval (for example, $\Delta T_1$ or $\Delta T_2$) between the start moment at which the terminal device sends the uplink signal and the start moment at which the network device receives the uplink signal is an uplink transmission delay between the network device and the terminal device. A sum of the downlink transmission delay and the uplink transmission delay is the round trip transmission delay. It is assumed that the downlink transmission delay is equal to the uplink transmission delay. Therefore, the downlink transmission delay or the uplink transmission delay may also be referred to as a unidirectional transmission delay, and the round trip transmission delay is twice of the unidirectional transmission delay.

For example, the round trip transmission delay is used as an example. For different time precision, specific values of the round trip transmission delay are also different. Therefore, there may be a plurality of time lengths representing the round trip transmission delay, for example, a first time length or a TA value.

(2) First time length

The network device may determine the first time length in a plurality of manners. For example, in a random access procedure, the network device may obtain, through measurement based on a random access preamble sent by the terminal device, that an interval between a start moment at which the network device sends a downlink signal in a slot and a start moment at which the network device receives the random access preamble in the same slot is the first time length. For another example, in a non-random access procedure (in this case, the terminal device may be in a connected state), the network device may obtain, through measurement based on an uplink signal sent by the terminal device, that an interval between a start moment at which the network device sends a downlink signal and a start moment at which the network device receives the uplink signal is a third time length (because timing adjustment is performed when the terminal device sends the uplink signal, the third time length herein may be understood as an adjustment amount of the first time length). Further, the network device updates the measured first time length based on the third time length to obtain a new first time length. For example, time precision of the first time length may be nanoseconds or ten nanoseconds. If the start moment at which the uplink signal is received is later than the start moment at which the downlink signal is received, it indicates that a round trip transmission delay of the terminal device becomes longer, and the updated first time length is equal to the measured first time length plus the third time length. If the start moment at which the uplink signal is received is earlier than the start moment at which the downlink signal is received, it indicates that a round trip transmission delay of the terminal device becomes shorter, and the updated first time length is equal to the measured first time length minus the third time length.

The uplink signal in the non-random access procedure may be a sounding reference signal (sounding reference signal, SRS), a demodulation reference signal (demodulation reference signal, DMRS), a channel quality indicator (channel quality indicator, CQI), an acknowledgment (acknowledgement, ACK), a negative acknowledgement (negative acknowledgement, NACK), or a physical uplink shared channel (physical uplink shared channel, PUSCH).

(3) TA value

As shown in FIG. 4(a), because distances between terminal devices and the network device are different, moments at which uplink signals arrive at the network device are different. Consequently, a timing offset may exist between the terminal devices. However, when the timing offset is greater than length of a cyclic prefix (cyclic prefix, CP) of an orthogonal frequency division multiple (orthogonal frequency division multiple, OFDM) symbol, the terminal devices interfere with each other. To overcome interference between the terminal devices, the terminal devices need to perform timing adjustment, to implement uplink synchronization. As shown in (b) of FIG. 4, the terminal device 1 advances the start moment at which the uplink signal is sent by $2\Delta T_1$, and the terminal device 2 advances the start moment at which the uplink signal is sent by $2\Delta T_2$. In this case, the network device receives the uplink signals of the terminal device 1 and the terminal device 2 at a same moment, thereby overcoming mutual interference between the terminal devices.

For example, the network device may determine a TA value, and send a timing advance command to the terminal device. Then the terminal device may determine the TA value according to the timing advance command. Both the network device and the terminal device may maintain the TA value.

In a possible scenario (random access procedure), the network device may determine the timing advance command based on a random access preamble sent by the terminal device, and send the timing advance command to the terminal device in a random access response (random access response, RAR). Correspondingly, the terminal device may obtain the TA value according to the timing advance command. In a 5G communication system, the timing advance command may include 12 bits (corresponding to a value range of 0 to 3846). The timing advance command may indicate an adjustment amount (referred to as a first adjustment amount for ease of description) of the TA value. Then, the terminal device may calculate the TA value based on the first adjustment amount.

For example, if the first adjustment amount is $N_{TA1}$, the terminal device may determine the TA value based on the following formula:

$$TA\ value = N_{TA1}*step + N_{TA,offset}*Tc \qquad Formula\ 1$$

Herein, step is an adjustment granularity/step of the TA value, and step=$16*64Tc/2^\mu$, where Tc is a minimum time unit defined in the 5G communication system, a value of $\mu$ is related to a subcarrier spacing (subcarrier space, SCS) corresponding to an uplink transfer message (for example, a message 3 in the random access procedure) following the RAR, and $2^\mu$=SCS/15kHz. If SCS=15 kHz, $2^\mu$=1; if SCS=30 kHz, $2^\mu$=2. The rest may be deduced by analogy. When an SCS corresponding to the message 3 in the random access procedure is equal to 15 kHz, step=520.83 ns. For a specific implementation of determining $N_{TA,offset}$ by the terminal device, refer to an existing solution. In an example, $N_{TA,offset}$ may be equal to 0.

In another possible scenario (non-random access procedure), the network device may send the timing advance command to the terminal device in the connected state. For example, after the terminal device implements uplink synchronization with the network device in the random access procedure, the timing advance may be invalidated due to a plurality of reasons. Therefore, the terminal device needs to continuously update the timing advance. There may be a plurality of reasons for invalidating the timing advance. For example, for a terminal device in high-speed movement (for example, a terminal device on a running high-speed railway), a transmission delay between the terminal device and the network device continuously changes, and the timing advance needs to be continuously updated. In this scenario, the network device determines the timing advance command based on the uplink signal sent by the terminal device, and sends the timing advance command to the terminal device in a MAC control element (control element, CE). The timing advance command may include six bits (corresponding to a value range of 0 to 63), and may indicate an adjustment amount (referred to as a second adjustment amount for ease of description) of the TA value, and then the terminal device may calculate the TA value based on the second adjustment amount.

For example, if the second adjustment amount is $N_{TA2}$, the terminal device may determine the TA value (which may also be referred to as TAnew) based on the following formula:

$$TA\ value = TAold + (N_{TA2}-31)*step \qquad Formula\ 2$$

Herein, TAnew is a current uplink timing advance of the terminal device, TAold is a previous uplink timing advance of the terminal device, step is an adjustment granularity/step of TA value, and step=$16*64Tc/2^\mu$, where $\mu$ is related to a maximum SCS in a plurality of activated uplink bandwidth parts (bandwidth part, BWP) in a TA group (TA group, TAG) corresponding to $N_{TA2}$, and $2^\mu$=SCS/15kHz. When the maximum SCS in the activated uplink BWP in the TAG is 15 kHz, step=520.83 ns.

(4) Relationship between the first time length and the TA value

Both the first time length and the TA value may represent the round trip transmission delay between the terminal device and the network device. From a perspective of the network device, the TA value may be obtained based on the first time length.

For example, in the random access procedure, the network device may obtain the first time length through measurement based on the random access preamble sent by the terminal device, and then determine the TA value (or the timing advance command) based on the first time length. The time precision of the first time length obtained by the network device through measurement based on the random access preamble sent by the terminal device may be one nanosecond or ten nanoseconds. To be specific, the first time length determined by the network device is a value of high time precision. However, because the timing advance command includes 12 bits (where a TA value adjustment step is large), the TA value of the terminal device is a value of low time precision (less than the time precision of the first time length). For example, step=520.83 ns, and $N_{TA,offset}$=0. If the network device obtains, through measurement based on the random access preamble sent by the terminal device, that the first time length is 1100 ns, the network device may determine, based on the first time length, that $N_{TA1}$=2 and TA value=520.83*2=1041.66 ns. It can be learned that because the time precision of the first time length is different from the time precision of the TA value, there is a numerical difference between the first time length and the TA value.

For another example, in the non-random access procedure, after obtaining the adjustment amount of the first time length through measurement based on the uplink signal sent by the terminal device (because in the non-random access procedure, the terminal device sends the uplink signal based on TAold, the network device may obtain the adjustment amount of the first time length through measurement based on the uplink signal), the network device may update the first time length based on the adjustment amount of the first time length to obtain a new first time length, determine TAnew based on the new first time length, and then determine the timing advance command ($N_{TA2}$) based on TAnew and TAold. Alternatively, the network device may directly determine the timing advance command ($N_{TA2}$) based on the adjustment amount of the first time length. Further, the network device may determine TAnew based on $N_{TA2}$ and TAold.

It should be noted that: (1) The foregoing content is described by using interaction between the terminal device and the network device as an example, and is also applicable to a scenario in which the CU and the DU are separated. For example, in the scenario in which the CU and the DU are separated, the DU may determine the first time length and/or the TA value in the foregoing described manner.

(2) In embodiments of this application, a value of the time precision may include two parts: The first part is a numerical value, and the second part is a time unit. For example, the TA value is used as an example. In this case, the second part of the time precision of the TA value depends on a minimum time unit (for example, ns) of the TA value, and the first part depends on a TA value adjustment granularity (or a step) (for example, 520.83). Further, it can be learned that a value of the time precision of the TA value is 520.83 ns. For another example, the first time length is used as an example. In this case, the second part of the time precision of the first time length depends on a minimum time unit of the first time length, and the first part depends on an adjustment granularity of the first time length. For example, a smaller value of the time precision indicates higher time precision, and a larger value indicates lower time precision.

Based on the foregoing related technical features, the following describes in detail the time synchronization method provided in embodiments of this application with reference to Embodiment 1 to Embodiment 3.

In an example, the time synchronization method provided in embodiments of this application may include: A CU determines first reference time, where the first reference time is reference time of a terminal device at a reference point; and the CU sends first information to the terminal device, where the first information is used to indicate the first reference time. After receiving the first information, the terminal device may obtain the reference time of the terminal device at the reference point. In this manner, the terminal device may obtain the reference time of the terminal device at the reference point from the CU. Compared with a solution in which a terminal device determines reference time of the terminal device at a reference point based on reference time on a DU side that is obtained from a CU and a unidirectional transmission delay between the terminal device and the DU, this solution can effectively reduce processing complexity of the terminal device and reduce power consumption of the terminal device. In addition, because the CU may send the first information to the terminal device in higher layer signaling (for example, an RRC message), information transmission security can be effectively ensured.

For example, the foregoing method may include two possible solutions: solution 1 and solution 2. In solution 1, the CU may receive second information and third information from the DU, where the second information is used to indicate second reference time, the second reference time is reference time of the DU at the reference point, and the third information is used to determine a unidirectional transmission delay between the DU and the terminal device; and the CU may determine the first reference time based on the second reference time and the unidirectional transmission delay, and sends the first information to the terminal device, where the first information is used to indicate the first reference time. In this manner, the CU determines the first reference time based on the second information and the third information sent by the DU and sends the first reference time to the terminal device. Compared with the solution in which the terminal device determines the reference time of the terminal device at the reference point based on the reference time on the DU side that is obtained from the CU and the unidirectional transmission delay between the terminal device and the DU, this solution can ensure more accurate determined first reference time because the CU has a stronger processing capability than the terminal device.

In solution 2, the DU may determine the first reference time based on second reference time and a unidirectional transmission delay, and send the first reference time to the CU. Then, the CU sends the first information to the terminal device, where the first information is used to indicate the first reference time. In this manner, the DU determines the first reference time and sends the first reference time to the CU, and then the CU sends the first reference time to the terminal device. The DU does not need to send the second reference time and the unidirectional transmission delay to the CU, and the CU does not need to calculate the first reference time. This reduces signaling overheads between the CU and the DU.

In another example, the time synchronization method provided in embodiments of this application may include (for ease of description, referred to as solution 3): A DU may determine first reference time based on second reference time and a unidirectional transmission delay, and send the first reference time to a terminal device. In this manner, the DU determines the first reference time and sends the first reference time to the terminal device. This effectively improves transmission efficiency and reduces signaling overheads between a CU and the DU.

It should be noted that the reference time of the terminal device at the reference point may also be replaced with reference time on a terminal device side. The reference time on the terminal device side is time which has been compensated by air interface transmission delay. The reference time of the DU at the reference point may also be replaced with the reference time on a DU side, reference time of a network side at the reference point, or reference time on a network side.

**Embodiment 1**

In Embodiment 1, a possible implementation of the time synchronization method is described based on solution 1.

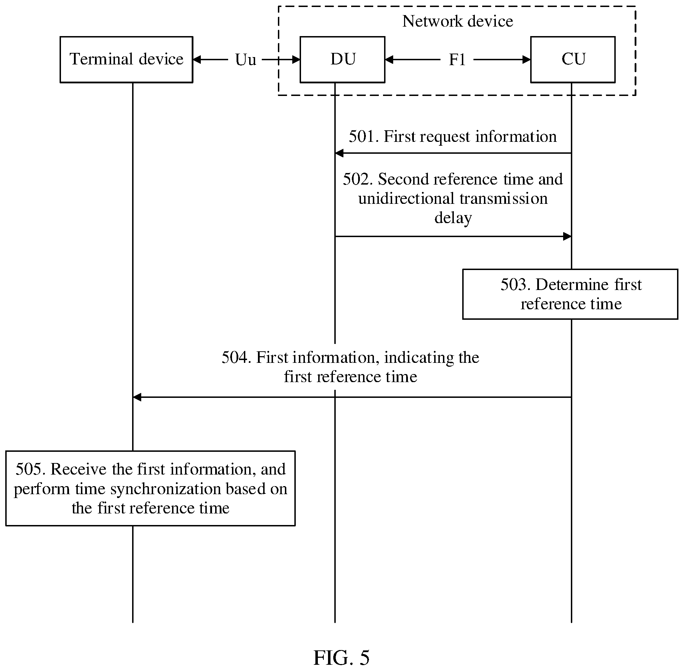

FIG. 5 is a schematic flowchart corresponding to a time synchronization method according to Embodiment 1 of this application. As shown in FIG. 5, the method includes the following steps.

Step 501. A CU sends first request information to a DU. Correspondingly, the DU receives the first request information.

Herein, there may be a plurality of trigger factors for the CU to send the first request information to the DU. For example, after determining that high-precision time synchronization needs to be performed, a terminal device sends a time synchronization request to the CU. Correspondingly, after receiving the time synchronization request sent by the terminal device, the CU may send the first request information to the DU. For another example, after determining that a terminal device needs to perform high-precision time synchronization, the CU may send the first request information to the DU.

Step 502. The DU sends second information and third information to the CU based on the first request information, where the second information is used to indicate second reference time, the second reference time is reference time of the DU at a reference point, and the third information is used to determine a unidirectional transmission delay between the DU and the terminal device. Correspondingly, the CU receives the second information and the third information.

Herein, there may be a plurality of manners used by the DU to send the second information and the third information to the CU. In a possible implementation, the DU may send the second information and the third information to the CU in a same message. For example, the DU may send the second information and the third information to the CU in any one of the following messages: a reference time information report message, an initial uplink RRC message transfer (initial uplink RRC message transfer) message, an uplink RRC message transfer (uplink RRC message transfer) message, a UE context setup response (UE context setup response) message, and a UE context modify response (UE context modify response) message. In another possible implementation, the DU may send the second information and the third information to the CU in different messages. For example, the DU may send the second information to the CU in a reference time information report message, and send the third information to the terminal device in an uplink RRC message transfer message.

The following separately describes in detail the first request information, the second information, and the third information described above.

1. First request information

The first request information is carried in a reference time information reporting control message, a downlink RRC message transfer (downlink RRC message transfer) message, a UE context setup request (UE context setup request) message, or a UE context modify request (UE context modify request) message.

The following describes two possible implementations.

Implementation 1: The first request information may be used to request the second information and the third information, or the first request information may be used to request the second reference time and the unidirectional transmission delay. For example, the first request information may include information indicating the DU to report the second information and the third information (or information indicating the DU to report the second reference time and the unidirectional transmission delay). Further, the first request information may further include an identifier of the terminal device. Herein, the information indicating the DU to report the second information and the third information may include information (referred to as information 1 for ease of description) indicating the DU to report the second information and information (referred to as information 2) indicating the DU to report the third information. The information 1 and the information 2 may be same information (for example, information carried in a same information element), or may be different information (for example, information carried in different information elements). For another example, the first request information may include an identifier of the terminal device. In this case, the identifier of the terminal device may be used to implicitly indicate the DU to report the second information and the third information. For example, the first request information is carried in the reference time information reporting control message. After receiving the reference time information reporting control message, if determining that the reference time information reporting control message includes the first request information, the DU may send the second information and the third information to the CU. For example, the DU may send the second information and the third information to the CU in the reference time information report message. If determining that the reference time information reporting control message does not include the first request information, the DU may send the second information to the CU, without sending the third information to the CU. For subsequent implementation, refer to the foregoing description in FIG. 3.

For example, after determining that the reference time information reporting control message includes the first request information, the DU may obtain capability information of the DU, and determine, based on the capability information of the DU, whether the DU supports reporting of the unidirectional transmission delay. If determining that the DU supports reporting of the unidirectional transmission delay, the DU may send the second information and the third information to the CU. If determining that the DU does not support reporting of the unidirectional transmission delay, the DU may send the second information to the CU, without sending the third information to the CU. For subsequent implementation, refer to the foregoing description of FIG. 3.

Implementation 2: The first request information may be used to request the third information (that is, the unidirectional transmission delay between the DU and the terminal device), and the first request information may include information indicating the DU to report the third information. Further, the first request information may include an identifier of the terminal device. For another example, the first request information may include an identifier of the terminal device. In this case, the identifier of the terminal device may be used to implicitly indicate the DU to report the third information.

For example, the first request information is carried in the reference time information reporting control message. In this case, after receiving the reference time information reporting control message, if determining that the reference time information reporting control message includes the first request information, the DU may send the second information and the third information to the CU. If determining that the reference time information reporting control message does not include the first request information, the DU may send the second information to the CU, without sending the third information to the CU. For subsequent implementation, refer to the foregoing description in FIG. 3.

For example, the first request information is carried in another message (for example, the downlink RRC transfer message) different from the reference time information reporting control message. In this case, after receiving the downlink RRC transfer message, if determining that the downlink RRC transfer message includes the first request information, the DU may send the third information to the CU. For example, the DU may send the third information to the CU in an uplink RRC transfer message; and send the second information to the CU after receiving the reference time information reporting control message. For example, the DU may send the second information to the CU in the reference time information report message.

In this implementation, the DU may send capability information of the DU to the CU, where the capability information of the DU is used to indicate whether the DU supports reporting of the unidirectional transmission delay. Correspondingly, after the CU receives the capability information reported by the DU, if determining that the DU supports reporting of the unidirectional transmission delay, the CU may send the first request information to the DU. If determining that the DU does not support reporting of the unidirectional transmission delay, the CU may not send the first request information to the DU. This can reduce resource overheads. The DU may send the capability information of the DU to the CU in a plurality of manners. For example, the DU may actively report the capability information to the CU, or the DU may report the capability information to the CU based on an indication of the CU. In an example, the DU may send the capability information to the CU in an F1 setup response message or a DU configuration update message.

It should be noted that: (1) The foregoing description is provided by using an example in which the first request information includes an identifier of one terminal device. In another possible example, the first request information may include identifiers of a plurality of terminal devices. Correspondingly, after receiving the first request information, the DU may send a plurality of pieces of third information to the CU, where the plurality of pieces of third information are separately used to determine unidirectional transmission delays between the DU and the plurality of terminal devices. In an example, the plurality of pieces of third information may be carried in a same message. In other words, the DU may send the plurality of pieces of third information to the CU at a time. (2) In embodiments of this application, the identifier of the terminal device may be a gNB-DU UE F1 application protocol (F1 application protocol, F1AP) identifier (ID), or the identifier of the terminal device may include a gNB-DU UE F1AP ID and a gNB-CU UE F1AP ID. The gNB-DU UE F1AP ID may be an F1AP ID allocated by the DU to the terminal device, and the gNB-CU UE F1AP ID may be an F1AP ID allocated by the CU to the terminal device. In another possible example, the identifier of the terminal device may alternatively be other information for identifying the terminal device. For example, the identifier of the terminal device may be a combination of a cell identifier and a cell radio network temporary identifier (cell radio network temporary identifier, C-RNTI). For another example, if the terminal device is in an inactive (INACTIVE) state, the identifier of the terminal device may be an inactive- radio network temporary identifier (Inactive-radio network temporary identifier, I-RNTI), where the I-RNTI is used to distinguish between different terminal devices in a radio notification network area.

2. Second information

As described above, the second information is used to indicate the second reference time (that is, the reference time of the DU at the reference point). A time unit of the second reference time may be millisecond, microsecond, femtosecond, nanosecond, or another time unit of a smaller magnitude. The time unit of the second reference time is not limited in embodiments of this application, and is merely an example for description herein.

The second information may include a first value relative to preset time, and optionally, may further include at least one of reference point information, time type information, and an undetermined error value. The following provides detailed descriptions separately.

(1) First value

The first value may include a plurality of time parameters corresponding to the second reference time, and the plurality of time parameters may correspond to different time precision. For example, the plurality of time parameters may include a quantity of days (for example, a), a quantity of seconds (for example, b), a quantity of milliseconds (for example, c), and a value (for example, d) in a unit of ten nanoseconds relative to the preset time. the second reference time is a*86400*1000*100000+b*1000*100000+c*100000+d.

(2) Time type information

The time type information is used to indicate a time type of the second reference time, where the time type of the second reference time may include GPS time, coordinated universal time (coordinated universal time, UTC), or local time. ① For example, if the time type of the second reference time is GPS time, the second reference time may be time that is obtained by the DU from a clock source and that is relative to GPS start time (that is, the preset time). The GPS start time may be 00:00:00 on January 6, 1980 in the solar calendar. ② For another example, if the time type of the second reference time is local time, the second reference time may be time that is obtained by the DU from a clock source and that is relative to local start time (that is, the preset time). The local start time may be determined based on a local clock of a synchronization clock source. ③ For another example, if the time type of the second reference time is UTC time, the second reference time may be time that is obtained by subtracting leap seconds (leap Seconds) from GPS time obtained by the DU from a clock source and that is relative to UTC start time (that is, the preset time). The UTC start time may be 00:00:00 on January 1, 1900 in the solar calendar (midnight between Sunday on December 31, 1899 and Monday on January 1, 1900).

It should be noted that a specific manner in which the DU obtains the second reference time is not limited in this embodiment of this application. The foregoing is merely an example for description.

(3) Reference point information

The reference point information is used to indicate the reference point, and the reference point may be a start boundary or an end boundary of a radio frame. For example, the reference point information includes a reference SFN. In this case, the reference point may be a start boundary or an end boundary of a radio frame corresponding to the reference SFN.

It should be noted that the foregoing describes some information that may be included in the second information. In another possible example, the second information may further include other information. This is not specifically limited.

3. Third information

As described above, the third information is used to determine the unidirectional transmission delay between the DU and the terminal device. For example, the third information may include at least one of the following: a first time length, a second time length, a TA value, half of the TA value, and an adjustment amount of the TA value. Optionally, the third information may further include the identifier of the terminal device.

(1) First time length and second time length

For the first time length, refer to the foregoing description. The second time length may be half of the first time length. Therefore, the second time length may represent the unidirectional transmission delay. For example, after determining the first time length, the DU may calculate the second time length. Time precision of the first time length or the second time length is higher than time precision of the TA value. For example, the time precision of the first time length or the second time length may be one nanosecond or ten nanoseconds.

If the third information includes the first time length, the CU may use half of the first time length as the unidirectional transmission delay. If the third information includes the second time length, the CU may directly use the second time length as the unidirectional transmission delay.

(2) TA value and half of the TA value

The TA value may be obtained based on the first time length. The TA value may represent a round trip transmission delay, and half of the TA value may represent the unidirectional transmission delay. For example, in a random access procedure or a non-random access procedure, a network device determines the first time length, and may calculate the TA value based on the first time length.

If the third information includes the TA value, the CU may use half of the TA value as the unidirectional transmission delay. If the third information includes half of the TA value, the CU may directly use half of the TA value as the unidirectional transmission delay.

(3) Adjustment amount of the TA value

It can be learned from the foregoing description that the adjustment amount of the TA value may be a first adjustment amount or a second adjustment amount. If the third information includes the first adjustment amount, the CU may determine the TA value (refer to formula 1) based on the first adjustment amount, and then use half of the TA value as the unidirectional transmission delay. If the third information includes the second adjustment amount, the CU may determine the TA value (refer to formula 2) based on an original TA value (that is, TAold) and the second adjustment amount, and then use half of the TA value as the unidirectional transmission delay.

In an example, when the third information includes the adjustment amount of the TA value, the third information may further include indication information 1, and the indication information 1 is used to indicate that the adjustment amount of the TA value is the first adjustment amount or the second adjustment amount. For example, the indication information 1 includes one bit. When a value of the bit is 1, it indicates that the adjustment amount of the TA value is the first adjustment amount. When a value of the bit is 0, it indicates that the adjustment amount of the TA value is the second adjustment amount. In another example, two information elements may be preset: an information element 1 and an information element 2. The information element 1 is used to carry the first adjustment amount, and the information element 2 is used to carry the second adjustment amount. In this case, the CU may determine, by using different information elements, that the adjustment amount of the TA value is the first adjustment amount or the second adjustment amount.

In embodiments of this application, a quantity of bits included in an information element (for example, the information element 1) used to carry the first adjustment amount may be greater than or equal to 12, or a quantity of bits included in an information element (for example, the information element 2) used to carry the second adjustment amount may be greater than or equal to 6. The first adjustment amount is used as an example. For a same first adjustment amount, when a quantity of bits included in an information element used to carry the first adjustment amount is larger, a step is smaller and precision is higher correspondingly. For example, when the quantity of bits included in the information element used to carry the first adjustment amount is 12, $step=16*64Tc/2^{\mu}$; and when the quantity of bits included in the information element used to carry the first adjustment amount is 16, $step=64Tc/2^{\mu}$. The step corresponding when the quantity of bits included in the information element used to carry the first adjustment amount is 16 is one sixteenth of the step corresponding when the quantity of bits included in the information element used to carry the first adjustment amount is 12. In this case, time precision of the first adjustment amount can be improved. Because the TA value is determined based on the first adjustment amount (refer to formula 1), the time precision of the TA value is also high. Correspondingly, in the following step 503, the first reference time determined by the CU based on the second reference time and half of the TA value (the unidirectional transmission delay) can also better meet a high-precision time synchronization requirement.

In addition, the timing advance command (indicating the first adjustment amount) sent by the DU to the terminal device may also be greater than 12 bits. In this case, time precision of the TA value determined by the terminal device based on the first adjustment amount is high. The timing advance command (indicating the second adjustment amount) sent by the DU to the terminal device may also be greater than 6 bits. In this case, time precision of the TA value determined by the terminal device based on the second adjustment amount is high.

It should be noted that step 501 is an optional step. For example, if determining that the terminal device needs to perform high-precision time synchronization, the DU may send the second information and the third information to the CU. In this case, step 501 may not be performed again.

Step 503. The CU determines the first reference time based on the second reference time and the unidirectional transmission delay.

For example, the CU may obtain the first reference time by adding the second reference time and the unidirectional transmission delay.

Step 504. The CU sends the first information to the terminal device, where the first information is used to indicate the first reference time.

Herein, a time unit of the first reference time may be millisecond, microsecond, femtosecond, nanosecond, or another time unit of a smaller magnitude. The time unit of the first reference time is not limited in embodiments of this application, and is merely an example for description herein.

For example, for an implementation in which the first information indicates the first reference time, refer to the implementation in which the second information indicates the second reference time. For example, the first information may include a plurality of time parameters corresponding to the first reference time. Optionally, the first information may further include at least one of reference point information, time type information (used to indicate a time type of the first reference time), and an undetermined error value. The reference point information included in the first information may be the same as the reference point information included in the second information, the time type of the first reference time may be the same as the time type of the second reference time, and the undetermined error value included in the first information may be the same as the undetermined error value included in the second information.

In this embodiment of this application, the first information may further include indication information 2, where the indication information 2 is used to indicate that reference time indicated by the first information is the reference time of the terminal device at the reference point (or reference time at a terminal side). For example, the indication information 2 may be a Boolean value. For example, when the value is true (true), it indicates that the reference time indicated by the first information is the reference time of the terminal device at the reference point. When the value is false (false), it indicates that the reference time indicated by the first information is the reference time of the DU at the reference point.

The CU may send the first information to the terminal device in a plurality of manners. For example, the CU may send the first information to the terminal device in an RRC message. The RRC message may be an RRC reconfiguration message, a handover command, an RRC connection resume (RRC connection resume) message, an RRC connection establishment message, or an RRC connection re-establishment message.

Step 505. The terminal device receives the first information, and performs time synchronization based on the first reference time.

For example, when the CU sends the first information to the terminal device in the RRC message, correspondingly, an RRC layer of the terminal device may receive the first information, and determine, based on the indication information 2, that the reference time indicated by the first information is the reference time of the terminal device at the reference point. Further, the RRC layer of the terminal device may determine absolute time based on the first reference time and the preset time, and may notify an upper layer (for example, a non-access stratum and an application layer) of the absolute time. Correspondingly, after receiving the absolute time, the application layer of the terminal device may implement time synchronization between the terminal device side and a network side based on the absolute time.

If determining that the time type of the first reference time is GPS time, the terminal device may determine the absolute time based on the first reference time and GPS start time. For another example, if determining that the time type of the first reference time is local time, the terminal device may determine the absolute time based on the first reference time and local start time. It should be noted that, if the first information includes the undetermined error value, the terminal device may determine the absolute time based on the first reference time, the preset time, and the undetermined error value.

According to the foregoing method, the DU may send the second information and the third information to the CU, and then the CU may determine the reference time of the terminal device at the reference point based on the second information and the third information, and send the reference time of the terminal device at the reference point to the terminal device. This can effectively reduce processing complexity of performing time synchronization by the terminal device, and reduce power consumption of the terminal device. In addition, on one hand, when the third information may include the first time length or the second time length, because the time precision of the first time length or the second time length is higher than the time precision of the TA value, the reference time of the terminal device at the reference point determined by the CU can better meet a high-precision time synchronization requirement. Alternatively, when the third information includes the adjustment amount of the TA value, because the quantity of bits included in the information element for carrying the adjustment amount of the TA value may be greater than 12 (or greater than 6), the time precision of the adjustment amount of the TA value is improved. In this way, the reference time of the terminal device at the reference point determined by the CU can better meet the high-precision time synchronization requirement. On the other hand, because the CU may send the reference time of the terminal device at the reference point to the terminal device in higher layer signaling (for example, the RRC message), information transmission security can be effectively ensured.

## Embodiment 2

In Embodiment 2, a possible implementation of the time synchronization method is described based on solution 2.

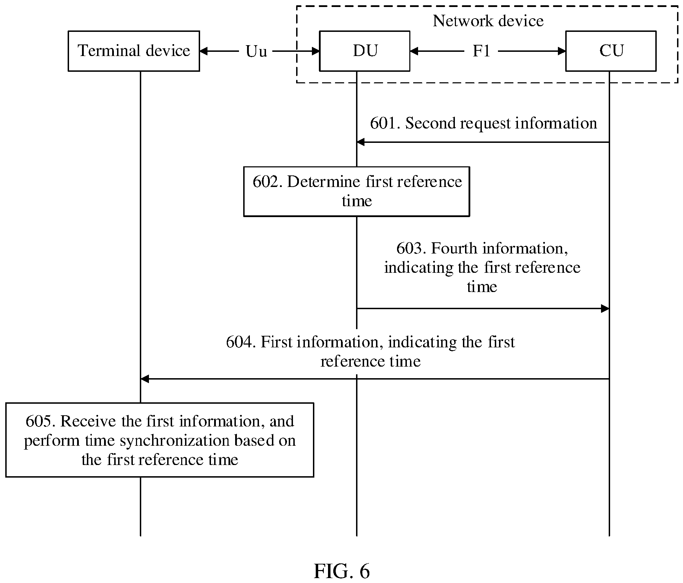

FIG. 6 is a schematic flowchart corresponding to a time synchronization method according to Embodiment 2 of this application. As shown in FIG. 6, the method includes the following steps.

Step 601. A CU sends second request information to a DU, where the second request information may be used to request reference time of a terminal device at a reference point, or in other words, the second request information is used to request the DU to report the reference time of the terminal device at the reference point. Correspondingly, the DU receives the second request information.

For example, the second request information may be carried in a reference time information reporting control message, a downlink RRC transfer message, a terminal device context setup request message, or a terminal device context modify request message.

In a possible implementation, the second request information may include information (referred to as indication information 3 for ease of description) indicating the DU to report the reference time of the terminal device at the reference point. Further, the second request information may include an identifier of the terminal device.

In an example (1), the indication information 3 may be a Boolean value. When the value is true, the DU is indicated to report the reference time of the terminal device at the reference point. When the value is false, the DU is indicated to report reference time of the DU at the reference point. Further, when the value of the indication information 3 is true, the second request information may further include the identifier of the terminal device. When the value of the indication information 3 is false, the second request information may no longer include the identifier of the terminal device. For example, the second request information is carried in the reference time information reporting control message. The DU receives the reference time information reporting control message. If determining that the reference time information reporting control message includes the indication information 3 (where the value of the indication information 3 is true) and the identifier of the terminal device, the DU may learn that the CU requests the reference time of the terminal device at the reference point. If the reference time information reporting control message includes the indication information 3 (where the value of the indication information 3 is false), the DU may learn that the CU requests the reference time of the DU at the reference point.

In an example (2), the indication information 3 may include one bit. When a value of the bit is 1, the DU is indicated to report the reference time of the terminal device at the reference point. When the value of the bit is 0, the DU is indicated to report reference time of the DU at the reference point. Further, when the value of the indication information 3 is 1, the second request information may further include the identifier of the terminal device. When the value of the indication information 3 is 0, the second request information may no longer include the identifier of the terminal device. For example, the second request information is carried in the reference time information reporting control message. The DU receives the reference time information reporting control message. If determining that the reference time information reporting control message includes the indication information 3 (where the value of the indication information 3 is 1) and the identifier of the terminal device, the DU may learn that the CU requests the reference time of the terminal device at the reference point. If the reference time information reporting control message includes the indication information 3 (where the value of the indication information 3 is 0), the DU may learn that the CU requests the reference time of the DU at the reference point.

In an example (3), when the second request information includes the indication information 3, the DU is indicated to report the reference time of the terminal device at the reference point. When the second request information does not include the indication information 3, the DU is indicated to report reference time of the DU at the reference point. Further, when the second request information includes the indication information 3, the second request information may further include the identifier of the terminal device. When the second request information does not include the indication information 3, the second request information may no longer include the identifier of the terminal device. For example, the second request information is carried in the reference time information reporting control message. The DU receives the reference time information reporting control message. If determining that the reference time information reporting control message includes the indication information 3 and the identifier of the terminal device, the DU may learn that the CU requests the reference time of the terminal device at the reference point. If determining that the reference time information reporting control message does not include the indication information 3 or the identifier of the terminal device, the DU may learn that the CU requests the reference time of the DU at the reference point.

In another possible implementation, the second request information includes an identifier of the terminal device. In this case, the identifier of the terminal device may be used to implicitly indicate the DU to report the reference time of the terminal device at the reference point.

For example, the second request information is carried in the reference time information reporting control message. The DU receives the reference time information reporting control message. If determining that the reference time information reporting control message includes the identifier of the terminal device, the DU may learn that the CU requests the reference time of the terminal device at the reference point. If determining that the reference time information reporting control message does not include the identifier of the terminal device, the DU may learn that the CU requests reference time of the DU at the reference point.

Step 602. The DU determines first reference time, where the first reference time is the reference time of the terminal device at the reference point.

Herein, the DU may obtain the reference time of the DU at the reference point and a unidirectional transmission delay between the DU and the terminal device, and then determine the reference time of the terminal device at the reference point based on the reference time of the DU at the reference point and the unidirectional transmission delay.

(1) For implementation of obtaining, by the DU, the reference time of the DU at the reference point, refer to the description in Embodiment 1. For example, the DU may obtain, from a clock source, time relative to GPS start time as the reference time of the DU at the reference point. For another example, the DU may obtain, from a clock source, time relative to local start time as the reference time of the DU at the reference point.

(2) The DU may obtain the unidirectional transmission delay between the DU and the terminal device in a plurality of manners. For example, the DU may obtain a first time length, and use half of the first time length as the unidirectional transmission delay between the DU and the terminal device. For another example, the DU may obtain a TA value, and use half of the TA value as the unidirectional transmission delay between the DU and the terminal device. For a manner in which the DU obtains the first time length or the TA value, refer to the foregoing description.

It should be noted that step 601 is an optional step. For example, if determining that the terminal device needs to perform high-precision time synchronization, the DU may determine the reference time of the terminal device at the reference point. In this case, step 601 may not be performed again.

Step 603. The DU sends fourth information to the CU, where the fourth information is used to indicate the reference time (which may also be referred to as the first reference time) of the terminal device at the reference point. Correspondingly, the CU receives the fourth information.

For example, the fourth information may be carried in any one of the following messages: a reference time information report message, an initial uplink RRC transfer message, an uplink RRC transfer message, a terminal device context setup response message, or a terminal device context modify response message.

For example, the fourth information may include a plurality of time parameters corresponding to the first reference time. Further, the fourth information may further include the identifier of the terminal device. In an example, the fourth information may further include at least one of the following: time type information (used to indicate a time type of the first reference time), reference point information, and an undetermined error value.

Step 604. The CU sends first information to the terminal device.

The first information may include a plurality of time parameters corresponding to the first reference time. Optionally, the first information may further include at least one of reference point information, time type information (used to indicate the time type of the first reference time), and an undetermined error value. The plurality of time parameters corresponding to the first reference time, the reference point information, the time type information, and the undetermined error value that are included in the first information may be separately same as the plurality of time parameters corresponding to the first reference time, the reference point information, the time type information, and the undetermined error value that are included in the fourth information.

For example, for specific implementation of step 604, refer to related descriptions of step 504 in Embodiment 1. Details are not described again.

Step 605. The terminal device receives the first information, and performs time synchronization based on the first reference time.

For example, for specific implementation of step 605, refer to related descriptions of step 505 in Embodiment 1. Details are not described again.

According to the foregoing method, the DU may determine the reference time of the terminal device at the reference point, and send the reference time of the terminal device at the reference point to the CU. Then the CU sends the reference time of the terminal device to the terminal device. This can effectively reduce processing complexity of performing time synchronization by the terminal device, and reduce power consumption of the terminal device. In addition, on one hand, determining the first reference time by the DU can effectively reduce a processing load of the CU. On the other hand, the DU may determine the unidirectional transmission delay based on the first time length, and further determine the reference time of the terminal device at the reference point. Because time precision of the first time length is high, the determined reference time of the terminal device at the reference point can better meet a high-precision time synchronization requirement.

**Embodiment 3**

In Embodiment 3, a possible implementation of the time synchronization method is described based on solution 3.

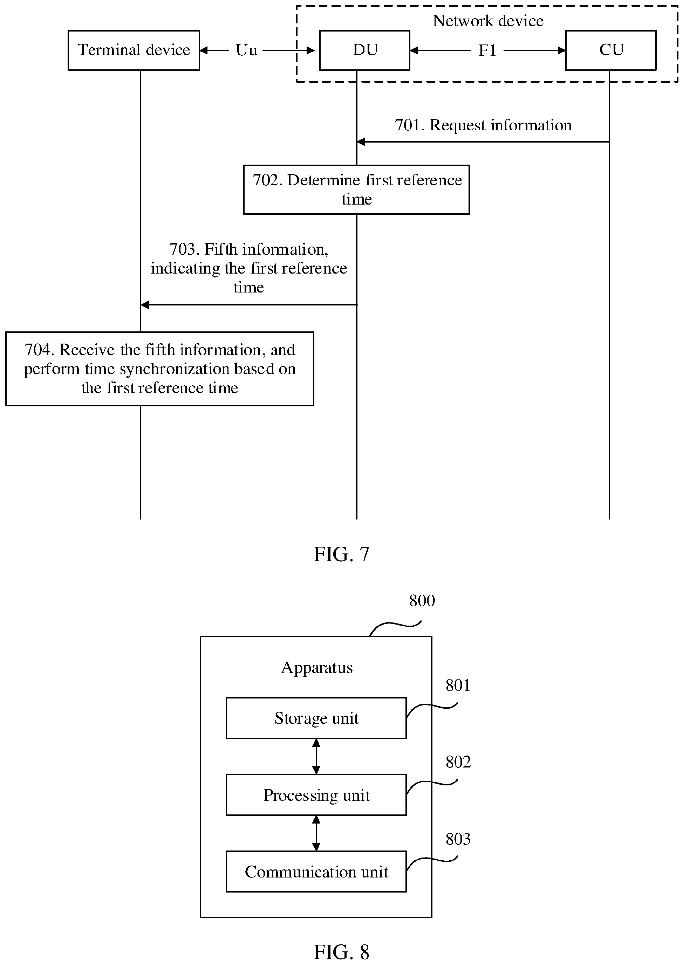

FIG. 7 is a schematic flowchart corresponding to a time synchronization method according to Embodiment 3 of this application. As shown in FIG. 7, the method includes the following steps.

Step 701. A CU sends third request information to a DU. Correspondingly, the DU receives the third request information.

Herein, the third request information may include an identifier of a terminal device, and the third request information is used to request the DU to send reference time (first reference time) of the terminal device at a reference point to the terminal device. For specific implementation, refer to the description about the second request information in Embodiment 2.

Step 702. The DU determines first reference time, where the first reference time is reference time of the terminal device at the reference point. For specific implementation, refer to the description in step 602 in Embodiment 2.

Step 703. The DU sends fifth information to the terminal device, where the fifth information is used to indicate the first reference time.

For example, the DU may send the fifth information to the terminal device in a MAC CE or DCI.

Herein, content included in the fifth information may be the same as content included in the first information described in Embodiment 1. Details are not described again.

Step 704. The terminal device receives the fifth information, and performs time synchronization based on the first reference time.

According to the foregoing method, the DU determines the first reference time and sends the first reference time to the terminal device. This effectively improves transmission efficiency and reduces signaling overheads between the CU and the DU.

For Embodiment 1 to Embodiment 3, it should be noted that:

(1) The foregoing focuses on differences among Embodiment 1 to Embodiment 3. For other content than the differences, Embodiment 1 to Embodiment 3 may be mutually referenced.

(2) Step numbers in the flowcharts described in Embodiment 1 to Embodiment 3 are merely examples of execution procedures, and do not constitute a limitation on an execution sequence of the steps. In embodiments of this application, there is no strict execution sequence between steps that do not have a time sequence dependency relationship with each other. In addition, not all steps shown in the flowcharts are mandatory steps. Some steps may be added or deleted based on the flowcharts according to an actual requirement. For example, step 501, step 601, and step 701 may be selectively performed.

The foregoing mainly describes the solutions provided in embodiments of this application from a perspective of device interaction. It may be understood that, to implement the foregoing functions, the CU and the DU may include corresponding hardware structures and/or software modules for executing the functions. A person skilled in the art should easily be aware that, in combination with units and algorithm steps of the examples described in embodiments disclosed in this specification, embodiments of this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the CU or the DU may be divided into functional units based on the foregoing method examples. For example, each functional unit may be obtained through division based on a corresponding function, or two or more functions may be integrated into one unit. The integrated unit may be implemented in a form of hardware, or may be implemented in a form of a software functional unit.

When an integrated unit is used, FIG. 8 is a possible example block diagram of an apparatus involved in embodiments of this application. As shown in FIG. 8, an apparatus 800 may include a processing unit 802 and a communication unit 803. The processing unit 802 is configured to control and manage actions of the apparatus 800. The communication unit 803 is configured to support communication between the apparatus 800 and another device. Optionally, the communication unit 803 is also referred to as a transceiver unit, and may include a receiving unit and/or a sending unit, configured to perform a receiving operation and a sending operation separately. Optionally, the apparatus 800 may further include a storage unit 801, configured to store program code and/or data of the apparatus 800.

The apparatus 800 may be the CU in any one of the foregoing embodiments, or may further be a chip disposed in the CU. The processing unit 802 may support the apparatus 800 in performing actions of the CU in the foregoing method examples. Alternatively, the processing unit 802 mainly performs an internal action of the CU in the method examples, and the communication unit 803 may support communication between the apparatus 800 and another device (for example, a DU).

Specifically, in an embodiment, the processing unit 802 is configured to determine first reference time, where the first reference time is reference time of a terminal device at a reference point. The communication unit 803 is configured to send first information to the terminal device, where the first information is used to indicate the first reference time.

In a possible design, the communication unit 803 is further configured to receive second information and third information from a DU. The second information is used to indicate second reference time, the second reference time is reference time of the DU at the reference point, and the third information is used to determine a unidirectional transmission delay between the DU and the terminal device. The processing unit 802 is specifically configured to determine the first reference time based on the second reference time and the unidirectional transmission delay.

In a possible design, the communication unit 803 is specifically configured to: send first request information to the DU, where the first request information is used to request the unidirectional transmission delay, and the first request information includes an identifier of the terminal device; and receive the third information sent by the DU based on the first request information.

In a possible design, the communication unit 803 is further configured to receive capability information from the DU, where the capability information is used to indicate that the DU supports reporting of the unidirectional transmission delay.

In a possible design, the third information includes at least one of the following: (1) a first time length, where the first time length represents a round trip transmission delay between the DU and the terminal device, the first time length is obtained by measuring a first uplink signal or a second uplink signal sent by the terminal device, the first uplink signal is a random access preamble, and the second uplink signal is different from the first uplink signal; (2) a second time length, where the second time length is half of the first time length; (3) a TA value of the terminal device; (4) half of the TA value; and (5) an adjustment amount corresponding to the TA value. Time precision of the first time length or the second time length is higher than time precision of the TA value.

In a possible design, the communication unit 803 is further configured to receive fourth information from the DU, where the fourth information is used to indicate the first reference time.

In a possible design, the communication unit 803 is specifically configured to: send second request information to the DU, where the second request information is used to request the first reference time, and the second request information includes an identifier of the terminal device; and receive the fourth information sent by the DU.

The apparatus 800 may be the DU in any one of the foregoing embodiments or a chip disposed in the DU. The processing unit 802 may support the apparatus 800 in performing actions of the DU in the foregoing method examples. Alternatively, the processing unit 802 mainly performs an internal action of the DU in the method examples, and the communication unit 803 may support communication between the apparatus 800 and another device (for example, a CU).

Specifically, in an embodiment, the processing unit 802 is configured to determine second information and third information, where the second information is used to indicate second reference time, the second reference time is reference time of the DU at a reference point, and the third information is used to determine a unidirectional transmission delay between the DU and a terminal device. The communication unit 803 is configured to send the second information and the third information to a CU.

In a possible design, the communication unit 803 is specifically configured to: receive first request information from the CU, where the first request information is used to request the DU to report the unidirectional transmission delay, and the first request information includes an identifier of the terminal device; and send the third information to the CU based on the first request information.

In a possible design, the communication unit 803 is further configured to send capability information of the DU to the CU, where the capability information is used to indicate that the DU supports reporting of the unidirectional transmission delay.

In a possible design, the communication unit 803 is specifically configured to: receive first request information from the CU, where the first request information is used to request the second information and the third information, and the first request information includes an identifier of the terminal device; and send the second information and the third information to the CU after the processing unit 802 determines that reporting of the unidirectional transmission delay is supported.

In a possible design, the third information includes at least one of the following: (1) a first time length, where the first time length represents a round trip transmission delay between the DU and the terminal device, the first time length is obtained by measuring a first uplink signal or a second uplink signal sent by the terminal device, the first uplink signal is a random access preamble, and the second uplink signal is different from the first uplink signal; (2) a second time length, where the second time length is half of the first time length; (3) a timing advance TA value of the terminal device; (4) half of the TA value; and (5) an adjustment amount corresponding to the TA value. Time precision of the first time length or the second time length is higher than time precision of the TA value.

Specifically, in another embodiment, the processing unit 802 is configured to determine first reference time, where the first reference time is reference time of a terminal device at a reference point. The communication unit 803 is configured to send fourth information to a CU, where the fourth information is used to indicate the first reference time.

In a possible design, the communication unit 803 is specifically configured to: receive second request information from the CU, where the second request information is used to request the first reference time, and the second request information includes an identifier of the terminal device; and send the fourth information to the CU based on the second request information.

In a possible design, the processing unit 802 is specifically configured to: determine the second reference time, where the second reference time is reference time of the DU at the reference point; and determine the second time length, where the second time length represents a unidirectional transmission delay between the DU and the terminal device, and time precision of the second time length is higher than time precision of a TA value of the terminal device; and determine the first reference time based on the second reference time and the unidirectional transmission delay.

It should be understood that unit division in the foregoing apparatus is merely logical function division. In actual implementation, all or some of the units may be integrated into one physical entity, or may be physically separated. In addition, all units in the apparatus may be implemented in a form of software invoked by a processing element, or may be implemented in a form of hardware, or some units may be implemented in a form of software invoked by a processing element, and some units may be implemented in a form of hardware. For example, each unit may be an independently disposed processing element, or may be integrated into a specific chip of the apparatus for implementation. In addition, each unit may be stored in a memory in a form of a program, and invoked by a specific processing element of the apparatus to perform a function of the unit. In addition, all or some of these units may be integrated together, or may be implemented independently. The processing element herein may also be a processor, and may be an integrated circuit having a signal processing capability. In an implementation process, steps in the foregoing method or the foregoing units may be implemented by an integrated logic circuit of hardware in the processing element or implemented by software invoked by the processing unit.

In an example, a unit in any one of the foregoing apparatuses may be one or more integrated circuits configured to implement the foregoing method, for example, one or more application-specific integrated circuits (Application Specific Integrated Circuit, ASIC), or one or more microprocessors (digital signal processor, DSP), or, one or more field programmable gate arrays (Field Programmable Gate Array, FPGA), or a combination of at least two of these integrated circuit forms. For another example, when the unit in the apparatus may be implemented in a form of scheduling a program by a processing element, the processing element may be a processor, for example, a general-purpose central processing unit (central processing unit, CPU), or another processor that can invoke the program. For another example, these units may be integrated together and implemented in a form of a system-on-a-chip (system-on-a-chip, SOC).

The foregoing unit for reception is an interface circuit of the apparatus, and is configured to receive a signal from another apparatus. For example, when the apparatus is implemented in a form of a chip, the receiving unit is an interface circuit that is of the chip and that is configured to receive a signal from another chip or apparatus. The foregoing unit for sending is an interface circuit of the apparatus, and is configured to send a signal to another apparatus. For example, when the apparatus is implemented by a chip, the sending unit is an interface circuit that is of the chip and that is configured to send a signal to another chip or apparatus.

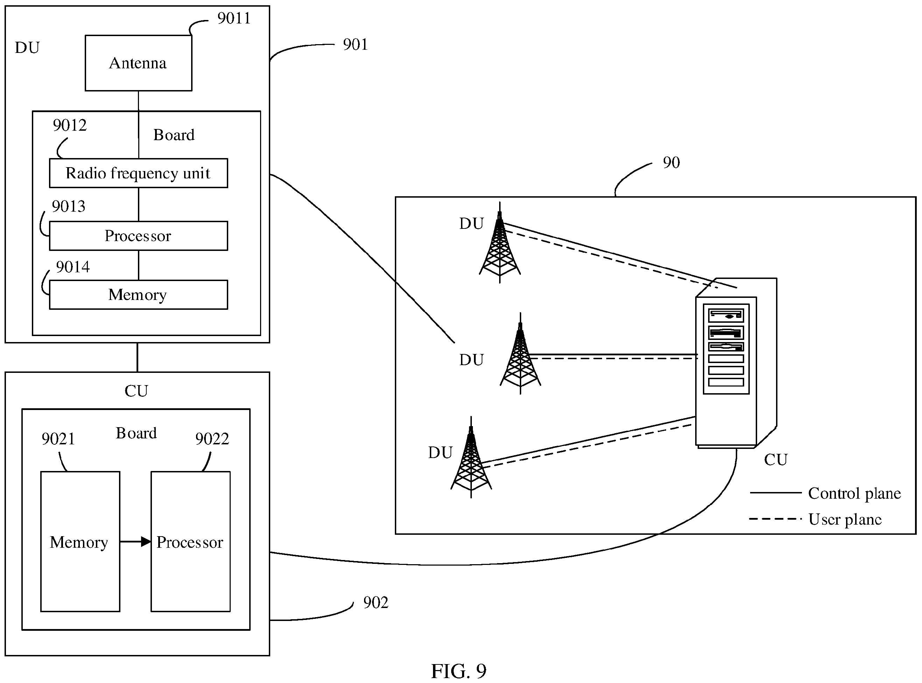

FIG. 9 is a schematic diagram of a structure of a network device according to an embodiment of this application. The network device (or base station) is applicable to the system architecture shown in FIG. 1. The network device includes one or more DUs 901 and one or more CUs 902. The DU 901 may be configured to perform a function of the DU in the foregoing method embodiments, and the CU 902 may be configured to perform a function of the CU in the foregoing method embodiments.

The DU 901 may include at least one antenna 9011, at least one radio frequency unit 9012, at least one processor 9013, and at least one memory 9014. The DU 901 is mainly configured to receive and send a radio frequency signal, perform conversion between a radio frequency signal and a baseband signal, and perform partial baseband processing. The CU 902 may include at least one processor 9022 and at least one memory 9021. The CU 902 and the DU 901 may communicate with each other through an F1 interface (for example, F1-C or F1-U). The CU 902 is mainly configured to perform baseband processing and the like. The DU 901 and the CU 902 may be physically disposed together, or may be physically disposed separately. In this embodiment of this application, an example in which the DU 901 and the CU 902 are physically disposed separately is used for description.

In addition, optionally, the network device 90 may include one or more radio frequency units, one or more DUs, and one or more CUs. The DU may include at least one processor 9013 and at least one memory 9014, the radio frequency unit may include at least one antenna 9011 and at least one radio frequency unit 9012, and the CU may include at least one processor 9022 and at least one memory 9021.

In an example, the CU 902 may include one or more boards. A plurality of boards may jointly support a radio access network (for example, a 5G network) with a single access indication, or may separately support radio access networks (for example, an LTE network, a 5G network, or another network) with different access standards. The memory 9021 and the processor 9022 may serve one or more boards. That is, a memory and a processor may be separately disposed on each board, or a plurality of boards may share a same memory and a same processor. In addition, a necessary circuit may be further disposed on each board. The DU 901 may include one or more boards. A plurality of boards may jointly support a radio access network (for example, a 5G network) with a single access indication, or may separately support radio access networks (for example, an LTE network, a 5G network, or another network) with different access standards. The memory 9014 and the processor 9013 may serve one or more boards. That is, a memory and a processor may be separately disposed on each board, or a plurality of boards may share a same memory and a same processor. In addition, a necessary circuit may be further disposed on each board.

The CU shown in FIG. 9 can implement processes related to the CU in the method embodiment shown in FIG. 5, FIG. 6, or FIG. 7. Operations and/or functions of the modules in the CU shown in FIG. 9 are separately used to implement corresponding procedures in the foregoing method embodiments. For details, refer to the descriptions in the foregoing method embodiments. To avoid repetition, detailed descriptions are properly omitted herein.

The DU shown in FIG. 9 can implement processes related to the DU in the method embodiment shown in FIG. 5, FIG. 6, or FIG. 7. Operations and/or functions of the modules in the DU shown in FIG. 9 are separately used to implement corresponding procedures in the foregoing method embodiments. For details, refer to the descriptions in the foregoing method embodiments. To avoid repetition, detailed descriptions are properly omitted herein.

Terms "system" and "network" may be used interchangeably in embodiments of this application. "At least one" means one or more, and "a plurality of" means two or more. The term "and/or" describes an association relationship for describing associated objects and represents that three relationships may exist. For example, A and/or B may represent the following cases: Only A exists, both A and B exist, and only B exists, where A and B may be singular or plural. The character "/" generally indicates a kind of "or" relationship between the associated objects. The term "at least one (one piece) of the following" or a similar expression thereof means any combination of these items, including any combination of a singular item (piece) or plural items (pieces). For example, "at least one of A, B, and C" includes A, B, C, AB, AC, BC, or ABC. In addition, unless otherwise specified, ordinal numbers such as "first" and "second" mentioned in embodiments of this application are intended to distinguish a plurality of objects, rather than limit an order, a time sequence, priorities, or importance degrees of the plurality of objects.

A person skilled in the art should understand that embodiments of this application may be provided as a method, a system, or a computer program product. Therefore, this application may use a form of hardware only embodiments, software only embodiments, or embodiments with a combination of software and hardware.

Moreover, this application may use a form of a computer program product that is implemented on one or more computer-usable storage media (including but not limited to a disk memory, a CD-ROM, an optical memory, and the like) that include computer-usable program code.

The foregoing describes this application with reference to the flowcharts and/or block diagrams of the method, the device (system), and/or the computer program product in this application. It should be understood that computer program instructions may be used to implement each process and/or each block in the flowcharts and/or the block diagrams and a combination of a process and/or a block in the flowcharts and/or the block diagrams. These computer program instructions may be provided to a processor of a general-purpose computer, a processor of a dedicated computer, or another programmable data processing device to produce a machine, so that the instructions executed by the processor of the computer and/or the another programmable data processing apparatus create an apparatus for implementing a specific function in one or more processes in the flowcharts and/or one or more block in the block diagrams.

These computer program instructions may also be stored in a computer readable memory that can guide a computer or another programmable data processing device to work in a specific manner, so that the instructions stored in the computer readable memory generate a manufacture including an instruction apparatus, and the instruction apparatus implements a function specified in one or more processes in the flowcharts and/or one or more blocks in the block diagrams.

These computer program instructions may be provided to a computer or another programmable device, so that the computer or the another programmable device performs a series of operation steps to generate processing implemented by the computer. Therefore, instructions executed on the computer or the another programmable device are used to implement steps of a function specified in one or more processes in the flowcharts and/or one or more blocks in the block diagrams.

Apparently, a person skilled in the art may make various modifications and variations to this application without departing from the scope of this application. This application is intended to cover these modifications and variations of this application provided that they fall within the scope of protection defined by the following claims and their equivalent technologies.

**Claims**

1. A time synchronization method, wherein the method is applicable to a first communication apparatus, the first communication apparatus is a central unit CU or a chip in the CU, and the method comprises:

   determining first reference time, wherein the first reference time is reference time of a terminal device at a reference point; and
   sending first information to the terminal device, wherein the first information is used to indicate the first reference time.

2. The method according to claim 1, wherein the determining first reference time comprises:

   receiving second information and third information from a distributed unit DU, wherein the second information is used to indicate second reference time, the second reference time is reference time of the DU at the reference point, and the third information is used to determine a unidirectional transmission delay between the DU and the terminal device; and
   determining the first reference time based on the second reference time and the unidirectional transmission delay.

3. The method according to claim 2, wherein the receiving third information from a DU comprises:

   sending first request information to the DU, wherein the first request information is used to request the unidirectional transmission delay, and the first request information comprises an identifier of the terminal device; and
   receiving the third information sent by the DU.

4. The method according to claim 3, wherein the method further comprises:
   receiving capability information from the DU, wherein the capability information is used to indicate that the DU supports reporting of the unidirectional transmission delay.

5. The method according to any one of claims 2 to 4, wherein the third information comprises at least one of the following:

   a first time length, wherein the first time length represents a round trip transmission delay between the DU and the terminal device, the first time length is obtained by measuring a first uplink signal or a second uplink signal sent by the terminal device, the first uplink signal is a random access preamble, and the second uplink signal is different from the first uplink signal;
   a second time length, wherein the second time length is half of the first time length;
   a timing advance TA value of the terminal device;
   half of the TA value; and
   an adjustment amount corresponding to the TA value, wherein
   time precision of the first time length or the second time length is higher than time precision of the TA value.

6. The method according to claim 1, wherein the determining first reference time comprises:
receiving fourth information from a DU, wherein the fourth information is used to indicate the first reference time.

7. The method according to claim 6, wherein the receiving fourth information from a DU comprises:

sending second request information to the DU, wherein the second request information is used to request the first reference time, and the second request information comprises an identifier of the terminal device; and
receiving the fourth information sent by the DU.

8. A time synchronization method, wherein the method is applicable to a second communication apparatus, the second communication apparatus is a distributed unit DU or a chip in the DU, and the method comprises:

determining second information and third information, wherein the second information is used to indicate second reference time, the second reference time is reference time of the DU at a reference point, and the third information is used to determine a unidirectional transmission delay between the DU and a terminal device; and
sending the second information and the third information to a central unit CU.

9. The method according to claim 8, wherein the sending the third information to a CU comprises:

receiving first request information from the CU, wherein the first request information is used to request the unidirectional transmission delay, and the first request information comprises an identifier of the terminal device; and
sending the third information to the CU based on the first request information.

10. The method according to claim 8 or 9, wherein the method further comprises:
sending capability information of the DU to the CU, wherein the capability information is used to indicate that the DU supports reporting of the unidirectional transmission delay.

11. The method according to claim 8, wherein the sending the second information and the third information to a CU comprises:

receiving first request information from the CU, wherein the first request information is used to request the second information and the third information, and the first request information comprises an identifier of the terminal device; and
sending the second information and the third information to the CU after determining that reporting of the unidirectional transmission delay is supported.

12. The method according to any one of claims 8 to 11, wherein the third information comprises at least one of the following:

a first time length, wherein the first time length represents a round trip transmission delay between the DU and the terminal device, the first time length is obtained by measuring a first uplink signal or a second uplink signal sent by the terminal device, the first uplink signal is a random access preamble, and the second uplink signal is different from the first uplink signal;
a second time length, wherein the second time length is half of the first time length;
a timing advance TA value of the terminal device;
half of the TA value; and
an adjustment amount corresponding to the TA value, wherein
time precision of the first time length or the second time length is higher than time precision of the TA value.

13. A time synchronization method, wherein the method is applicable to a second communication apparatus, the second communication apparatus is a distributed unit DU or a chip in the DU, and the method comprises:

determining first reference time, wherein the first reference time is reference time of a terminal device at a reference point; and
sending fourth information to a central unit CU, wherein the fourth information is used to indicate the first reference time.

14. The method according to claim 13, wherein the sending fourth information to a CU comprises:

receiving second request information from the CU, wherein the second request information is used to request the first reference time, and the second request information comprises an identifier of the terminal device; and
sending the fourth information to the CU based on the second request information.

15. The method according to claim 13 or 14, wherein the determining first reference time comprises:

determining second reference time, wherein the second reference time is reference time of the DU at the reference point; and determining a second time length, wherein the second time length represents a unidirectional transmission delay between the DU and the terminal device, and time precision of the second time length is higher than time precision of a TA value of the terminal device; and

determining the first reference time based on the second reference time and the unidirectional transmission delay.

16. A communication apparatus, comprising units or modules configured to perform the method according to any one of claims 1 to 7.

17. A communication apparatus, comprising units or modules configured to perform the method according to any one of claims 8 to 15.

18. A communication apparatus, comprising a processor and a memory, wherein the processor is coupled to the memory, and the processor is configured to implement the method according to any one of claims 1 to 7.

19. A communication apparatus, comprising a processor and a memory, wherein the processor is coupled to the memory, and the processor is configured to implement the method according to any one of claims 8 to 15.

20. A communication apparatus, comprising a processor and an interface circuit, wherein the interface circuit is configured to: receive a signal from another communication apparatus different from the communication apparatus and transmit the signal to the processor, or send a signal from the processor to another communication apparatus different from the communication apparatus; and the processor is configured to implement the method according to any one of claims 1 to 7 by using a logic circuit or executing code instructions.

21. A communication apparatus, comprising a processor and an interface circuit, wherein the interface circuit is configured to: receive a signal from another communication apparatus different from the communication apparatus and transmit the signal to the processor, or send a signal from the processor to another communication apparatus different from the communication apparatus; and the processor is configured to implement the method according to any one of claims 8 to 15 by using a logic circuit or executing code instructions.

22. A computer-readable storage medium, wherein the storage medium stores a computer program or instructions;

and when the computer program or the instructions are run by a communication apparatus, the method according to any one of claims 1 to 7 or the method according to any one of claims 8 to 15 is implemented.

23. A communication system, comprising the communication apparatus according to any one of claims 16, 18, and 20, and the communication apparatus according to any one of claims 17, 19, and 21.

24. A computer program product, wherein when a computer reads and executes the computer program product, the computer is enabled to perform the method according to any one of claims 1 to 7, or perform the method according to any one of claims 8 to 15.

EP 4 132 133 A1

FIG. 1

26

Terminal device                                   Network device

| Application Layer |
| Non-access stratum |
| Access stratum |

Access stratum

| SDAP layer | | SDAP layer |
| PDCP layer | | PDCP layer |
| RLC layer | | RLC layer |
| MAC layer | | MAC layer |
| PHY layer | | PHY layer |

FIG. 2a

Central unit CU

| RRC (radio resource control) | SDAP (service data adaptation protocol) |
|---|---|
| PDCP (packet data convergence protocol layer) | |

F1 interface

Distributed unit DU

RLC
(radio link control layer)

MAC
(media access control layer)

PHY
(physical layer)

FIG. 2b

Central unit CU

| RRC<br>(radio resource control) |
| :---: |
| SDAP<br>(service data adaptation protocol) |

F1 interface

Distributed unit DU

| PDCP<br>(packet data convergence protocol layer) |
| :---: |
| RLC<br>(radio link control layer) |
| MAC<br>(media access control layer) |
| PHY<br>(physical layer) |

FIG. 2c

**Central unit CU**

**Control plane CP**

| RRC |
| --- |
| (radio resource control) |

| PDCP |
| --- |
| (packet data convergence protocol layer) |

**User plane UP**

| SDAP |
| --- |
| (service data adaptation protocol) |

| PDCP |
| --- |
| (packet data convergence protocol layer) |

F1 interface          F1 interface

**Distributed unit DU**

| RLC |
| --- |
| (radio link control layer) |

| MAC |
| --- |
| (media access control layer) |

| PHY |
| --- |
| (physical layer) |

FIG. 2d

Network device

Terminal device ◄——— Uu ———► DU ◄——— F1 ———► CU

301. Reference time information
reporting control message

302. Reference time information
report message

303. Reference time on a DU
side

304. TAC

305. Determine reference time on a
terminal device side

306. Perform high-precision time
synchronization at a reference point

FIG. 3

Start moment T at which
the network device sends
a downlink signal

Network
device

Start moment T+ΔT₁ at
which the UE 1 receives
the downlink signal

Terminal device 1
(UE 1)

ΔT₁

Start moment T+ΔT₁ at
which the UE 1 sends an
uplink signal

Start moment T+2ΔT₁ at
which the network device
receives the uplink signal
of the UE 1

ΔT₁

Terminal device 2
(UE 2)

Start moment T+ΔT₂ at
which the UE 2 receives
the downlink signal

ΔT₂

Start moment T+ ΔT₂ at
which the UE 2 sends an
uplink signal

Start moment T+2ΔT₂ at
which the network device
receives the uplink signal
of the UE 2

ΔT₂

Timing offset

(a) Without timing
adjustment

Start moment T at which
the network device sends
a downlink signal

Network
device

Start moment T+ΔT₁ at
which the UE 1 receives
the downlink signal

Terminal device 1
(UE 1)

ΔT₁

2ΔT₁

Start moment T−ΔT₁ at
which the UE 1 sends an
uplink signal

Start moment T at which
the network device
receives the uplink signal
of the UE 1

ΔT₁

Terminal
device 2
(UE 2)

Start moment T+ΔT₂ at
which the UE 2 receives
the downlink signal

ΔT₂

2ΔT₂

Start moment
T−ΔT₂ at which
the UE 2 sends an
uplink signal

Start moment T at
which the network
device receives
the uplink signal
of the UE 2

ΔT₂

(b) With timing
advance adjustment

FIG. 4

Network device

Terminal device ←— Uu —→ DU ←— F1 —→ CU

501. First request information

502. Second reference time and
unidirectional transmission
delay

503. Determine first
reference time

504. First information, indicating the
first reference time

505. Receive the first information, and
perform time synchronization based on
the first reference time

FIG. 5

FIG. 6

FIG. 7

FIG. 8

FIG. 9

<table>
<tr><td colspan="2" align="center">**INTERNATIONAL SEARCH REPORT**</td><td>International application No.<br>**PCT/CN2021/085071**</td></tr>
</table>

**A. CLASSIFICATION OF SUBJECT MATTER**

H04W 56/00(2009.01)i

According to International Patent Classification (IPC) or to both national classification and IPC

**B. FIELDS SEARCHED**

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; EPTXT; 3GPP: 时间, 同步, 集中式单元, 分布式单元, 参考时间, 时间, 时刻, 时延, 延时, 标识, time synchron+, CU, DU, reference time, clock, TA

**C. DOCUMENTS CONSIDERED TO BE RELEVANT**

| Category* | Citation of document, with indication, where appropriate, of the relevant passages | Relevant to claim No. |
|---|---|---|
| X | CN 110167130 A (HUAWEI TECHNOLOGIES CO., LTD.) 23 August 2019 (2019-08-23) description paragraphs [0004]-[0138] | 1-24 |
| A | CN 110958070 A (HUAWEI TECHNOLOGIES CO., LTD.) 03 April 2020 (2020-04-03) entire document | 1-24 |
| A | CN 110662283 A (HUAWEI TECHNOLOGIES CO., LTD.) 07 January 2020 (2020-01-07) entire document | 1-24 |
| A | US 2020025865 A1 (QUALCOMM INCORPORATED) 23 January 2020 (2020-01-23) entire document | 1-24 |
| A | CN 110351823 A (HUAWEI TECHNOLOGIES CO., LTD.) 18 October 2019 (2019-10-18) entire document | 1-24 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **28 May 2021** | **22 June 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

| INTERNATIONAL SEARCH REPORT<br>Information on patent family members | | | | International application No.<br>**PCT/CN2021/085071** | | | |
|---|---|---|---|---|---|---|---|
| Patent document<br>cited in search report | | | Publication date<br>(day/month/year) | Patent family member(s) | | | Publication date<br>(day/month/year) |
| CN | 110167130 | A | 23 August 2019 | WO | 2019158067 | A1 | 22 August 2019 |
|    |           |   |               | EP | 3745784    | A1 | 02 December 2020 |
|    |           |   |               | IN | 202047036241 | A | 11 September 2020 |
|    |           |   |               | US | 20200396705 | A1 | 17 December 2020 |
| CN | 110958070 | A | 03 April 2020 | WO | 2020063535 | A1 | 02 April 2020 |
| CN | 110662283 | A | 07 January 2020 | WO | 2020001585 | A1 | 02 January 2020 |
| US | 2020025865 | A1 | 23 January 2020 | WO | 2020018179 | A1 | 23 January 2020 |
| CN | 110351823 | A | 18 October 2019 | WO | 2019192322 | A1 | 10 October 2019 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010297025